(19) Europäisches Patentamt / European Patent Office / Office européen des brevets

(11) **EP 4 224 944 A1**

(12) **EUROPEAN PATENT APPLICATION**
published in accordance with Art. 153(4) EPC

(43) Date of publication:
**09.08.2023  Bulletin 2023/32**

(21) Application number: **21874272.4**

(22) Date of filing: **17.09.2021**

(51) International Patent Classification (IPC):
**H04W 52/02** (2009.01)

(52) Cooperative Patent Classification (CPC):
**H04W 52/02;** Y02D 30/70

(86) International application number:
**PCT/CN2021/119003**

(87) International publication number:
**WO 2022/068611 (07.04.2022 Gazette 2022/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2020  PCT/CN2020/119458**

(71) Applicant: **GUANGDONG OPPO MOBILE TELECOMMUNICATIONS CORP., LTD.**
**Dongguan, Guangdong 523860 (CN)**

(72) Inventor: **ZHAO, Zhenshan**
**Dongguan, Guangdong 523860 (CN)**

(74) Representative: **Novagraaf Technologies**
**Bâtiment O2**
**2, rue Sarah Bernhardt**
**CS90017**
**92665 Asnières-sur-Seine Cedex (FR)**

(54) **SIDELINK TRANSMISSION METHOD AND TERMINAL**

(57)    The present application relates to a sidelink transmission method and a terminal. The method comprises: a terminal receiving sidelink indication information; and the terminal entering a wake-up state or a dormant state according to the sidelink indication information. According to the embodiments of the present application, sidelink indication information indicates that a terminal enters a wake-up state or a dormant state, such that the terminal can transition to the dormant state when same has no data for receiving, thereby reducing the power consumption of the terminal, and realizing energy conservation.

FIG. 6

**Description**

The present disclosure claims priority to PCT application No. PCT/CN2020/119458, filed on September 30, 2020 and titled "SIDELINK TRANSMISSION METHOD AND TERMINAL", the contents of which are incorporated by reference in its entirety.

**TECHNICAL FIELD**

Embodiments of the present disclosure relate to the communication technical field, and more specifically, to sidelink transmission method and a terminal.

**BACKGROUND**

Device to Device (D2D) communication is a Sidelink (SL) based transmission technology. Different from traditional cellular systems in which communication data is received or sent via a base station, the D2D system has higher spectral efficiency and lower transmission delay. The Vehicle to Everything (V2X) system adopts a terminal-to-terminal direct communication method. In sidelink transmission systems, how to reduce terminal power consumption is a problem that needs to be studied.

**SUMMARY**

Embodiments of the present disclosure provide a sidelink transmission method and a terminal which can reduce terminal power consumption.
An embodiment of the present disclosure provides a sidelink transmission method, including:

    receiving, by a terminal, sidelink indication information; and
    entering, by the terminal, a wake-up state or a sleep state according to the sidelink indication information.

An embodiment of the present disclosure provides a terminal, including:

    a receiving unit configured to receive, by the terminal, sidelink indication information; and
    a processing unit configured to enter a wake-up state or a sleep state according to the sidelink indication information.

An embodiment of the present disclosure provides a terminal device, including a processor and a memory. The memory is used to store a computer program, and the processor is used to call and run the computer program stored in the memory, to cause the terminal device to perform the above-mentioned sidelink transmission method.
An embodiment of the present disclosure provides a chip for implementing the above-mentioned sidelink transmission method.
Specifically, the chip includes: a processor configured to call and run a computer program from a memory to cause a device in which the chip is installed to perform the above-mentioned sidelink transmission method.
An embodiment of the present disclosure provides a computer-readable storage medium, which is configured to store a computer program, and when the computer program is run by a device, the device is caused to perform the above-mentioned sidelink transmission method.
An embodiment of the present disclosure provides a computer program product, including computer program instructions, and the computer program instructions cause a computer to perform the above- mentioned sidelink transmission method.
An embodiment of the present disclosure provides a computer program, which, when running on a computer, causes a computer to perform the above-mentioned sidelink transmission method.
In the embodiments of the present disclosure, the terminal is indicated to enter the wake-up state or the sleep state through the sidelike indication information, so that the terminal can transition to the sleep state when there is no data reception, thus reducing power consumption of the terminal, and realizing power saving.

**BRIEF DESCRIPTION OF THE DRAWINGS**

    FIG. 1 is a schematic diagram of an application scenario according to an embodiment of the present disclosure.
    FIG. 2a is a schematic diagram of an in-coverage sidelink communication.

FIG. 2b is a schematic diagram of a partial coverage sidelink communication.

FIG. 2c is a schematic diagram of an out-of-coverage sidelink communication.

FIG. 3a is a schematic diagram of unicast transmission.

FIG. 3b is a schematic diagram of groupcast transmission.

FIG. 3c is a schematic diagram of a broadcast transmission.

FIG. 4 is a schematic diagram of a DRX mechanism.

FIG. 5 is a schematic diagram of controlling DRX by a power-saving wake-up signal.

FIG. 6 is a schematic flowchart of a sidelink transmission method according to an embodiment of the present disclosure.

FIG. 7 is a schematic diagram of a sequence carrying sidelink indication information.

FIG. 8 is a schematic diagram when there is no sequence being detected.

FIG. 9 is a schematic diagram of a sleep state in which sequence detection is not performed.

FIG. 10 is a schematic diagram of a structure of a sequence carrying indication information.

FIG. 11 is a first schematic diagram of a first time range.

FIG. 12 is a second schematic diagram of the first time range.

FIG. 13 is a schematic block diagram of a terminal according to an embodiment of the present disclosure.

FIG. 14 is a schematic block diagram of a communication device according to an embodiment of the present disclosure.

FIG. 15 is a schematic block diagram of a chip according to an embodiment of the present disclosure.

FIG. 16 is a schematic block diagram of a communication system according to an embodiment of the present disclosure.

## DETAILED DESCRIPTION

The technical solutions in embodiments of the present disclosure will be described below with reference to the drawings in the embodiments of the present disclosure.

Technical solutions according to embodiments of the present disclosure can be applied to various communication systems, such as, Global System of Mobile communication (GSM) system, Code Division Multiple Access (CDMA) system, Wideband Code Division Multiple Access (WCDMA) system, General Packet Radio Service (GPRS), Long Term Evolution (LTE) system, Advanced Long Term Evolution (LTE-A) system, New Radio (NR) system, evolution system of NR system, LTE-based access to unlicensed spectrum (LTE-U) system, NR-based access to unlicensed spectrum (NR-U) system, Non-Terrestrial Networks (NTN) system, Universal Mobile Telecommunication System (UMTS), Wireless Local Area Networks (WLAN), Wireless Fidelity (WiFi), 5th-Generation (5G) system, or other communication systems, etc.

Generally speaking, traditional communication systems support a limited number of connections and are easy to implement. However, with the development of communication technologies, mobile communication systems will not only support traditional communications, but also support, for example, Device to Device (Device to Device, D2D) communications, Machine to Machine (M2M) communications, Machine Type Communication (MTC), Vehicle to Vehicle (V2V) communications, or Vehicle to everything (V2X), etc. Embodiments of the present disclosure can be applied to these communications systems.

Optionally, the communication systems in embodiments of the present disclosure can be applied to a Carrier Aggregation (CA) scenario, can also be applied to a Dual Connectivity (DC) scenario, and can also be applied to a standalone (SA) network deployment scenario.

Optionally, the communication system in embodiments of the present disclosure can be applied in unlicensed spectrum. The unlicensed spectrum may also be considered as shared spectrum. Or, the communication system in embodiments of the present disclosure can also be applied in licensed spectrum. The licensed spectrum may also be considered as non-shared spectrum.

Embodiments of the present disclosure are described in combination with a terminal device and a network device. The terminal device may also be called User Equipment (UE), access terminal, user unit, user station, mobile station, mobile terminal, remote station, remote terminal, mobile device, user terminal, terminal, wireless communication device, user agent or user device, etc.

The terminal device may be a station (ST) in a WLAN, a cellular phone, a cordless phone, a Session Initiation Protocol (SIP) phone, a Wireless Local Loop (WLL) station, or a Personal Digital Assistant (PDA) device, a handheld device with wireless communication capabilities, a computing device or other processing device connected to a wireless modem, a vehicle-mounted device, a wearable device, or a terminal device in a next-generation communication system, such as a terminal device in the NR network or a terminal device in a future evolved Public Land Mobile Network (PLMN) network.

In embodiments of the present disclosure, the terminal device may be deployed on land, including indoor or outdoor, handheld, wearable or vehicle-mounted; or, the terminal device may be deployed on water (such as on ships, etc.); or, the terminal device may be deployed in the air (such as on aircraft, balloons, and satellites, etc.).

In embodiments of the present disclosure, the terminal device may be a mobile phone, a tablet computer (Pad), a computer with wireless transceiver function, a virtual reality (VR) terminal device, an augmented reality (AR) terminal device, a wireless terminal device in industrial control, a wireless terminal device in self driving, a wireless terminal devices in remote medical, a wireless terminal device in smart grid, a wireless terminal device in transportation safety, a wireless terminal device in smart city, or a wireless terminal device in smart home, etc.

By way of example and not limitation, in embodiments of the present disclosure, the terminal device may also be a wearable device. The wearable device can also be referred to as a wearable smart device, which is a general term for applying wearable technology to intelligently design everyday wear and develop wearable devices, such as glasses, gloves, watches, clothing and shoes. A wearable device is a portable device that is worn directly on the body or integrated into users' clothes or accessories. The wearable device is not only a hardware device, but also realize powerful functions through software support, data interaction, and cloud interaction. Generalized wearable smart devices include full-featured and large-sized devices which can realize complete or partial functions that do not depend on smart phones, such as smart watches or smart glasses, and devices that only focus on a certain type of application functions, and need to cooperate with other devices like smart phones, such as smart bracelets for sign monitoring, or smart jewelry.

In embodiments of the present disclosure, the network device may be a device for communicating with a mobile device. The network device may be an Access Point (AP) in WLAN, a base station (BTS, Base Transceiver Station) in GSM or CDMA, or a base station (NB, NodeB) in WCDMA, an evolved base station in LTE (Evolutional Node B, eNB or eNodeB,), or a relay station or an access point, or a vehicle-mounted device, a wearable device, a network device (gNB) in an NR network, or a network device in future evolved PLMN network or a network device in a NTN network.

By way of example and not limitation, in embodiments of the present disclosure, the network device may have mobile characteristics, for example, the network device may be a mobile device. Optionally, the network device may be a satellite, or a balloon station. For example, the satellite may be a Low Earth Orbit (LEO) satellite, a Medium Earth Orbit (MEO) satellite, a Geostationary Earth Orbit (GEO) satellite, or a High Elliptical Orbit (HEO) satellite, etc. Optionally, the network device may also be a base station deployed on land, or water, etc.

In embodiments of the present disclosure, the network device provides services for a cell, and the terminal device communicates with the network device through transmission resources (for example, frequency domain resources, or spectrum resources) used by the cell. The cell may be a cell corresponding to the network device (for example, base station). The cell may belong to a macro base station or a base station corresponding to a small cell. The small cell here may include: a metro cell, a micro cell, a pico cell, a femto cell, etc. These small cells have the characteristics of small coverage and low transmit power, and are suitable for providing high-speed data transmission services.

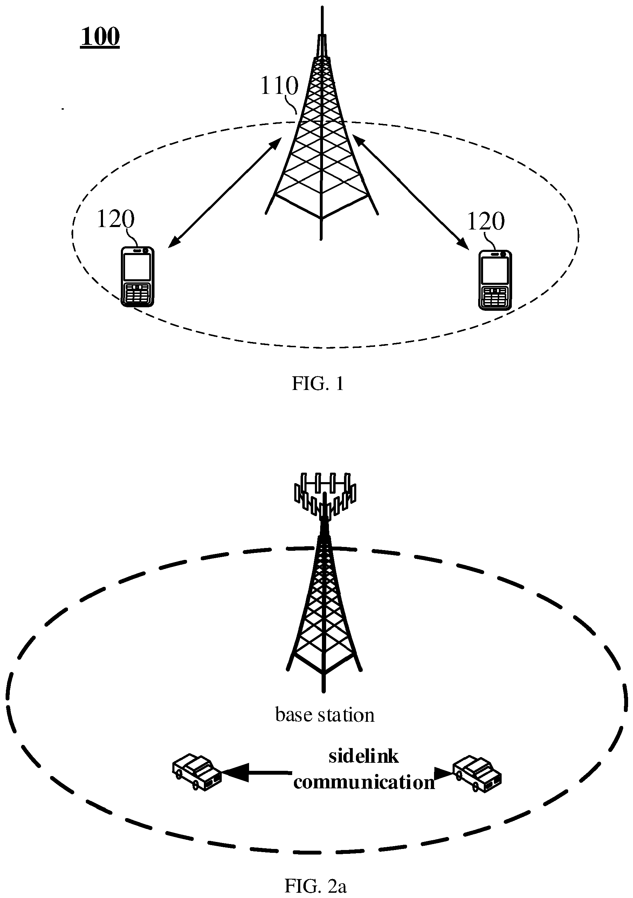

FIG. 1 exemplarily shows a communication system 100. The communication system includes a network device 110 and two terminal devices 120. Optionally, the communication system 100 may include multiple network devices 110, and the coverage of each network device 110 may include other numbers of terminal devices 120, which is not limited in embodiments of the present disclosure.

Optionally, the communication system 100 may further include other network entities such as a Mobility Management Entity (MME), an Access and Mobility Management Function (AMF), and so on, which is not limited in embodiments of the present disclosure.

The network device may further include an access network device and a core network device. That is, the wireless communication system further includes multiple core networks for communicating with the access network device. The access network device may be an evolved base station (evolutional node B, referred to as eNB or e-NodeB), a macro base station, a micro base station (also called "small base station"), a pico base station, an Access Point (AP), a Transmission Point (TP) or a new generation base station (new generation Node B, gNodeB), and so on in a Long-Term Evolution (LTE) system, a next-generation (mobile communication system) (next radio, NR) system or an authorized auxiliary access long-term evolution (LAA- LTE) system.

It should be understood that a device having a communication function in the network/system in embodiments of the present disclosure may be referred to as a communication device. Taking the communication system shown in FIG. 1 as an example, the communication device may include a network device and terminal devices with a communication function, and the network device and the terminal devices may be the specific devices in embodiments of the present disclosure, which will not be repeated here. The communication device may further include other devices in the communication system, such as other network entities like a network controller or a mobility management entity, which are not limited in embodiments of the present disclosure.

It should be understood that the terms "system" and "network" are often used interchangeably herein. The term "and/or" herein is only an association relationship to describe associated objects, indicating that there can be three kinds of relationships, for example, A and/or B can mean three cases: A alone, B alone, and A and B together. In addition, the character "/" herein generally indicates that the related objects are an "or" relationship.

It is to be understood that "indication/indicate" referred to in embodiments of the present disclosure may be a direct indication, an indirect indication, or representing an association relationship. For example, A indicates B can mean that A indicates B directly, for example, B may be obtained through A; or A indicates B can mean that A indicates B indirectly, for example, A indicates C and B may be obtained through C; or, A indicates B can mean that A and B have an association relationship.

In the description of embodiments of the present disclosure, the term "correspond/corresponding" may indicate a direct correspondence or indirect correspondence between two objects, or may indicate an association relationship between the two objects, or may be a relationship of indicating and being indicated, configuring and being configured, etc.

In order to facilitate the understanding of the technical solutions of the embodiments of the present disclosure, the related technologies of the embodiments of the present disclosure are described below. The following related technologies may be arbitrarily combined with the technical solutions of the embodiments of the present disclosure as optional solutions, and all of them fall with the protection scope of the embodiments of the present disclosure.

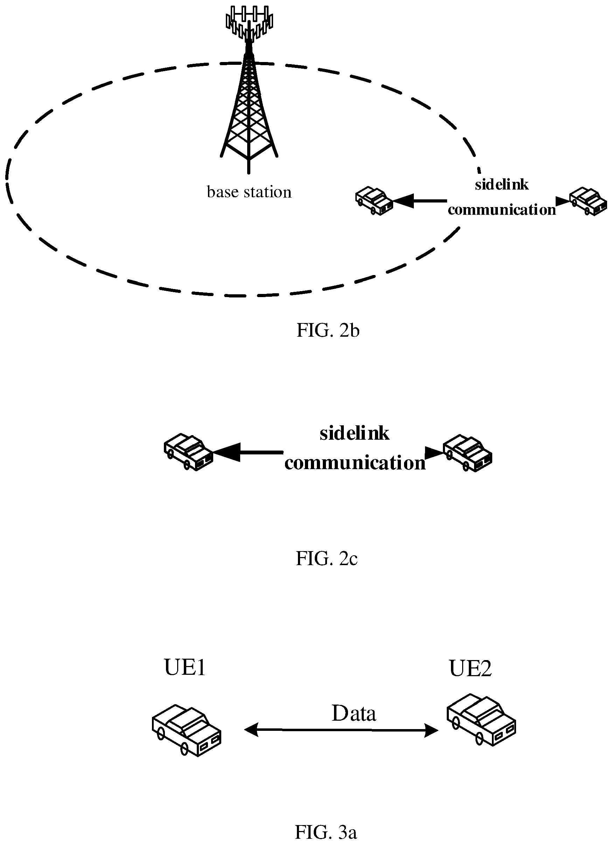

The technical solutions of the embodiments of the present disclosure may be applied to sidelink communications under different network coverage environments. According to the network coverage situation where a terminal performing communications is located, the sidelink communications may be divided into various types, for example, an in-coverage sidelink communication, a partial coverage sidelink communication, and an out-of-coverage sidelink communication, as shown in FIG. 2a, FIG. 2b and FIG. 2c respectively.

As shown in FIG. 2a: in the in-coverage sidelink communication, all terminals performing sidelink communications are within the coverage of the same base station, and thus all the terminals may receive configuration signaling from the base station to perform sidelink communications based on the same sidelink configuration.

As shown in FIG. 2b: in the partial coverage sidelink communication, some terminals performing sidelink communications are located within the coverage of the base station. These terminals can receive configuration signaling of the base station, and perform sidelink communications according to the configuration of the base station. However, terminals located outside the coverage of the network cannot receive configuration signaling from the base station. In this case, the terminals outside the network coverage determine the sidelink configuration according to pre-configuration information and information carried in Physical Sidelink Broadcast Channel (PSBCH) sent by a terminal within the network coverage, and carry out sidelink communications.

As shown in FIG. 2c: for the out-of-coverage sidelink communication, all terminals performing sidelink communications are located outside the network coverage, and all terminals determine sidelink configuration according to pre-configuration information to perform sidelink communications.

Regarding D2D/V2X, two transmission modes are included in 3GPP: a first mode and a second mode.

First mode: a transmission resource for a terminal is allocated by a base station. The terminal transmits data on the sidelink according to the resource(s) allocated by the base station. The base station may allocate resource(s) for a single transmission to the terminal, or the base station may allocate resource(s) for semi-static transmission to the terminal. As shown in FIG. 2a, a terminal is located within the coverage of the network, and the network allocates a transmission resource for sidelink transmission to the terminal.

Second mode: a terminal selects a resource from a resource pool for data transmission. As shown in FIG. 2c, a terminal is located outside the coverage of the cell, and the terminal autonomously selects a transmission resource from a pre-configured resource pool for sidelink transmission. Or, as shown in FIG. 2a, the terminal autonomously selects a transmission resource from a resource pool configured by the network to perform sidelink transmission.

In NR-V2X, autonomous driving needs to be supported, and thus higher requirements are placed on data interaction between vehicles, such as higher throughput, lower latency, higher reliability, greater coverage, more flexible resource allocation, etc.

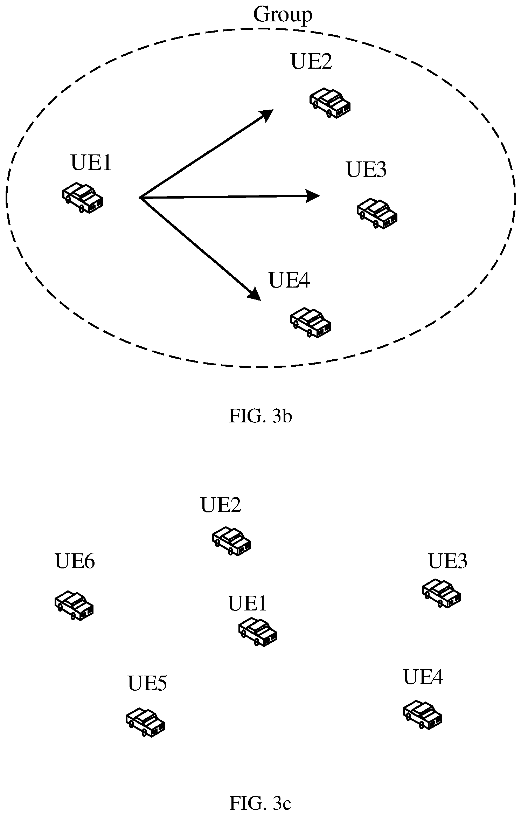

In LTE-V2X, a broadcast transmission mode is supported. In NR-V2X, a unicast transmission mode and a groupcast transmission mode are introduced. For a unicast transmission, there is only one terminal as the receiving terminal. As shown in FIG. 3a, a unicast transmission is performed between UE1 and UE2. For a groupcast transmission, its receiving terminals are all terminals in a communication group, or all terminals within a certain transmission distance. As shown in FIG. 3b, UE1, UE2, UE3 and UE4 form a communication group. UE1 transmits data, and other terminal devices in the group are all receiving terminals. For a broadcast transmission mode, the receiving terminal is any terminal around the transmitting terminal. As shown in FIG. 3c, UE1 is a transmitting terminal, and other terminals around it (UE2-UE6) are all receiving terminals.

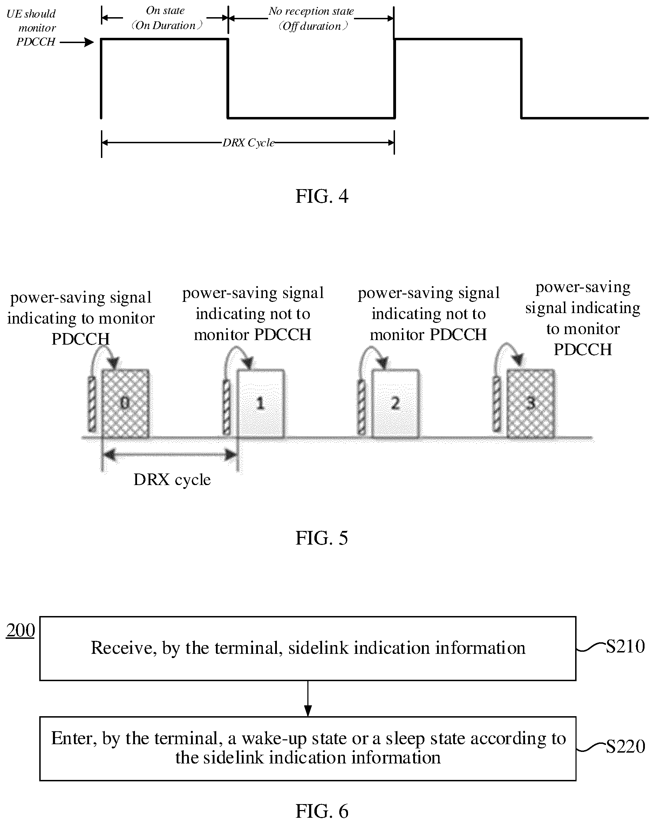

The following describes the DRX mechanism of the Uu interface (the air interface between a base station and a terminal), as shown in FIG. 4.

In a wireless network, when there is data to be transmitted, User Equipment (UE) monitors the Physical Downlink Control Channel (PDCCH) all the time, and sends and receives data according to an indication message sent by the network side. Thus, the power consumption of the UE and the time delay of data transmission are relatively large. Therefore, the 3GPP standard protocol introduces a Discontinuous Reception (DRX) power saving strategy in the LTE system.

The basic mechanism of DRX is to configure a DRX cycle for a UE in the Radio Resource Control Connected (RRC_CONNECTED) state. The DRX cycle consists of "On Duration (an on state)" and "Off Duration (a state in which no reception is performed)". During the "On Duration" time, the UE monitors and receives the Physical Downlink Control Channel (PDCCH), and this is called an activation period. During the "Off Duration" time, the UE does not receive PDCCH to reduce power consumption, and this is called a sleep period.

In DRX operation, the terminal controls On Duration and Off Duration of the terminal according to some timer parameters configured by the network. If data scheduling is received during the On Duration period, the terminal keeps monitoring the PDCCH based on the control of a DRX timer until data transmission is completed. Otherwise, if the terminal does not receive data scheduling during the On Duration, the terminal enters the Off Duration to save power.

The following describes the terminal power-saving mechanism in the NR system.

Since the power consumption of a NR terminal in the connected state accounts for most of the power consumption of the terminal, a NR Rel-16 power saving wake-up signal is also used for power saving when the terminal is in the RRC_CONNECTED state. An example terminal power saving mechanism is DRX. When DRX is configured, the terminal monitors the PDCCH during the DRX On Duration. If data scheduling is received during the On Duration, the terminal keeps monitoring the PDCCH based on the control of the DRX timer until the data transmission is completed. Otherwise, if the terminal does not receive data scheduling during DRX On Duration, the terminal enters Off Duration to realize power saving. It can be seen that DRX is an power-saving control mechanism with the DRX cycle as the time granularity, and therefore cannot achieve optimal power consumption control. For example, even if the terminal has no data scheduling, the terminal still needs to monitor the PDCCH during the running of the DRX On Duration timer which is started periodically, and thus there is still power waste.

In order to achieve further power saving of the terminal, NR power saving enhancement introduces an power-saving wake-up signal. A standardized power-saving wake-up signal is used in conjunction with the DRX mechanism. The specific technical principle is that the terminal receives an indication of the power-saving wake-up signal before the DRX On Duration. As shown in FIG. 5, it is an example of controlling DRX through the power-saving wake-up signal. When the terminal has data transmission in a DRX cycle, the power-saving wake-up signal "wakes up" the terminal to monitor the PDCCH during DRX On Duration. Otherwise, when the terminal has no data transmission in a DRX cycle, the power-saving wake-up signal does not "wake up" the terminal, and the terminal does not need to monitor the PDCCH during DRX On Duration. Compared with the DRX mechanism, when the terminal has no data transmission, the terminal can omit PDCCH monitoring during DRX On Duration, thereby realizing power saving. The time before the DRX On Duration of the terminal is called inactive time. The time when the terminal is in DRX On Duration is called the activation time.

The following describes the PDCCH-based power -saving signal.

In the NR system, PDCCH is used as an power-saving signal.

The design of PDCCH can be directly multiplexed, including coding, scrambling, resource mapping, search space, CORESET, etc., so the workload of standardization is small.

It has good compatibility and multiplexing characteristics with other signal transmission. Since relevant system(s) already supports(support) the PDCCH channel, the PDCCH has good compatibility and multiplexing characteristics with other channels such as PDSCH.

In enhanced SideLink (SL) technologies, it is needed to discuss terminal power-saving technologies in sidelink transmission, such as partial sensing and the introduction of DRX mechanism in the sidelink. On this basis, sidelink technologies can be further enhanced to reduce terminal power consumption.

FIG. 6 is a schematic flowchart of a sidelink transmission method 200 according to an embodiment of the present disclosure. The method may optionally be applied to any one of the systems shown in FIG. 1 to FIG. 3c, but is not limited thereto. The method includes at least some of the following.

In S210, a terminal receives sidelink indication information.

In S220, the terminal enters a wake-up state or a sleep state according to the sidelink indication information.

Exemplarily, terminal A may receive sidelink indication information from terminal B, and the sidelink indication information may indicate that terminal A enters a wake-up state or a sleep state. If the terminal A is in the wake-up state, and the sidelink indication information indicates the wake-up state (or indicates the terminal A to go to the wake-up state), then the terminal A may remain in the wake-up state. If the terminal A is in the wake-up state, and the sidelink indication information indicates the sleep state (or indicates the terminal A to go to the sleep state), then the terminal A may switch to the sleep state. If the terminal A is in the sleep state, and the sidelink indication information indicates the wake-up state (or indicates the terminal A to go to the wake-up state), then the terminal A may switch to the wake-up state. If the terminal A is in the sleep state, and the sidelink indication information indicates the sleep state (or indicates the terminal A to go to the sleep state), then the terminal A may remain in the sleep state.

Optionally, the wake-up state indicates that the terminal needs to perform sidelink data reception or measurement; the sleep state indicates that the terminal does not need to perform sidelink data reception or measurement. Exemplarily, the wake-up state is a state that the terminal is in the DRX On Duration or enters the DRX On Duration, or the terminal performs sidelink data reception or measurement during the On Duration period. The sleep state is a state that the terminal is in the DRX Off Duration or the terminal does not enter the DRX On Duration, or the terminal does not perform sidelink data reception or measurement during this period.

Optionally, the sidelink indication information is a wake-up signal, and the wake-up signal is used to indicate the terminal to enter the wake-up state.

Optionally, the sidelink indication information is a sleep signal, and the sleep signal is used to indicate the terminal to enter the sleep state.

Optionally, the terminal entering the wake-up state or the sleep state according to the sidelink indication information includes: determining, by the terminal, a time moment for entering the wake-up state or the sleep state based on a time moment when the sidelink indication information is received. Exemplarily, T is the time moment when the terminal receives the indication information, and the terminal may enter the wake-up state or the sleep state in the first slot after T time. Exemplarily, T is the time moment when the terminal receives the indication information, Tproc is the processing time of terminal, and the terminal may enter the wake-up state or sleep state in the first slot after T+Tproc time.

Optionally, the time moment when the terminal receives the sidelink indication information is the time moment corresponding to the first time-domain symbol or the last time-domain symbol that carries the sidelink indication information. Exemplarily, the time moment when the terminal receives the sidelink indication information is the time moment corresponding to the start position of the first time-domain symbol carrying the sidelink indication information; or, the time moment when the terminal receives the sidelink indication information is the time moment corresponding to the end position of the last time-domain symbol carrying the sidelink indication information.

Optionally, the method further includes: determining a first duration.

Optionally, determining, by the terminal, the time moment for entering the wake-up state or the sleep state based on the time moment when the sidelink indication information is received includes: entering, by the terminal, the wake-up state or the sleep state in the first slot after the terminal receives the sidelink indication information for the first duration.

Optionally, the method further includes: determining the first duration based on the processing time of the terminal.

Exemplarily, if the time moment of the sidelink indication information is the first time-domain symbol carrying the sidelink indication information, the first duration is the duration corresponding to the processing time of the terminal plus the duration occupied by a sequence or channel carrying the indication information.

Exemplarily, if the time moment when the terminal receives the sidelink indication information is the time moment corresponding to the last time-domain symbol carrying the sidelink indication information, the first duration may be the duration corresponding to the processing time of the terminal.

Optionally, the processing time of the terminal is determined based on the time for the terminal to perform sequence detection or sidelink channel detection. The time for sidelink channel detection includes at least one of the following: time for detecting PSCCH, time for detecting a second-stage SCI, time for detecting PSSCH, total time for detecting PSCCH and PSSCH, total time for detecting PSCCH and the second-stage SCI, and total time for detecting PSCCH, the second-stage SCI and PSSCH.

Optionally, the method further includes: obtaining, by the terminal, first indication information, and determining a time interval, the number of slots, or a slot offset according to the first indication information.

Optionally, the method further includes: obtaining, by the terminal, the first indication information according to pre-configuration information, network configuration information, or sidelink data sent by another terminal. Specifically, the pre-configuration information or network configuration information may be pre-configured resource pool information or network-configured resource pool information. The sidelink data sent by another terminal may be Sidelink Control Information (SCI), PCS-RRC signaling, Medium Access Control (MAC) Control Element (CE) sent by another terminal, CE), MAC Protocol Data Unit (PDU), etc.

Optionally, determining, by the terminal, the time moment to enter the wake-up state or the sleep state based on the time moment when the sidelink indication information is received, includes: determining, by the terminal, a slot for entering the wake-up state or the sleep state according to a slot where the sidelink indication information is located, and the time interval, the number of slots or the slot offset.

Exemplarily, the time interval determined by indication information in the pre-configured resource pool information is 2 slots. The time interval indicates a time interval between the slot when the terminal receives the sidelink indication information and the slot when the terminal transitions to the wake-up state or the sleep state. For example, if the terminal is in the wake-up state and receives in slot 3 the sidelink indication information indicating to enter the sleep state, the terminal enters the sleep state in slot 5.

Exemplarily, the slot offset determined by indication information in the resource pool information configured by the network is 2 slots. The slot offset indicates a time interval between the slot when the terminal receives the sidelink indication information and the slot when the terminal transitions to the wake-up state or the sleep state. For example, if the terminal is in the wake-up state and receives in slot 3 the sidelinke indication information indicating to enter the sleep state, then the terminal enters the sleep state in slot 5.

Exemplarily, terminal A receives SCI sent by terminal B, and the SCI includes indication information indicating that the time interval is 2 slots. The time interval indicates a time interval between the slot when the terminal receives the sidelink indication information and the slot when the terminal transitions to the wake-up state or the sleep state. For example, terminal A is in the wake-up state and receives in slot 3 the sidelink indication information sent by terminal B indicating to enter the sleep state, then terminal A enters the sleep state in slot 5.

Optionally, the sidelink indication information is carried by a sequence.

Optionally, the method further includes: when the sequence is a first sequence, entering, by the terminal, the wake-up state; and/r, when the sequence is a second sequence, entering, by the terminal, the sleep state. Exemplarily, the sending period of the sequence carrying the sidelink indication information includes a plurality of slots, and the terminal may perform sequence detection in each slot. For example, if the first sequence is detected in slot 0, the terminal enters the wake-up state; when the second sequence is detected in slot 2, the terminal enters the sleep state.

Optionally, the method further includes: when the sequence is the first sequence, determining, by the terminal, a second duration for entering the wake-up state; and/or, when the sequence is the second sequence, determining, by the terminal, a third duration for entering the sleep state. Specifically, when the first sequence is detected by the terminal, the terminal determines to enter the wake-up state, and keeps in the wake-up state for a time corresponding to the second duration. When the second sequence is detected by the terminal, the terminal determines to enter the sleep state, and keeps in the sleep state for a time corresponding to the third duration. The second duration and the third duration are configurable or stipulated by a protocol. For configurable cases, the parameters may be pre-configured, network-configured or terminal-configured. For example, the second duration and the third duration may be configured by a terminal sending the sidelink indication information sequence. In addition, the second duration and the third duration may be configured independently.

Optionally, the first sequence corresponds to a first cyclic shift value, and/or, the second sequence corresponds to a second cyclic shift value. Specifically, the first sequence is generated according to the first cyclic shift value, and/or the second sequence is generated according to the second cyclic shift value.

Optionally, the first cyclic shift value has a first correspondence relationship with the wake-up state; and/or, the second cyclic shift value has a second correspondence relationship with the sleep state.

Optionally, the first correspondence relationship is pre-configured, network-configured, or terminal-configured; and/or, the second correspondence relationship is pre-configured, network-configured, or terminal-configured. Exemplarily, if the first sequence is detected by the terminal, the first cyclic shift value used to generate the first sequence may be obtained, and then the wake-up state corresponding to the first cyclic shift value may be obtained according to the first correspondence relationship. In this case, the terminal may stay or enter the wake-up state. If the second sequence is detected by the terminal, the second cyclic shift value used to generate the second sequence may be obtained, and then the sleep state corresponding to the second cyclic shift value may be obtained according to the second correspondence relationship. In this case, the terminal may stay or go to sleep.

Optionally, the method further includes:

when the first correspondence relationship is pre-configured or network-configured, obtaining, by the terminal, resource pool configuration information, and determining the first correspondence relationship according to the resource pool configuration information; and/or,
when the second correspondence relationship is pre-configured or network-configured, obtaining, by the terminal, resource pool configuration information, and determining the second correspondence relationship according to the resource pool configuration information.

Optionally, the method further includes:

when the first correspondence relationship is terminal-configured, obtaining, by the terminal, SCI, PCS-RRC signaling, MAC CE or MAC PDU, and determining the first correspondence relationship according to the SCI, PCS-RRC signaling, MAC CE or MAC PDU; and/or,
when the second correspondence relationship is terminal-configured, obtaining, by the terminal, SCI, PCS-RRC signaling, MAC CE or MAC PDU, and determining the second correspondence relationship according to the SCI, PCS-RRC signaling, MAC CE or MAC PDU.

Optionally, the first cyclic shift value has a third correspondence relationship with the second duration of the wake-up state; and/or, the second cyclic shift value has a fourth correspondence relationship with the third duration of the sleep state.

Optionally, the third correspondence relationship is pre-configured, network-configured, or terminal-configured; and/or, the fourth correspondence relationship is pre-configured, network-configured, or terminal-configured.

Exemplarily, if the first sequence is detected by the terminal, the terminal may obtain the first cyclic shift value used to generate the first sequence, and then according to the first correspondence relationship, the terminal may obtain the wake-up state corresponding to the first cyclic shift value, and according to the third correspondence relationship, the terminal may obtain the second duration of the wake-up state. In this case, the terminal may stay or enter the wake-up state, and last for the second duration. If the second sequence is detected by the terminal, the terminal may obtain the second cyclic shift value used to generate the second sequence, and then according to the second correspondence relationship, the terminal may obtain the sleep state corresponding to the second cyclic shift value, and according to the fourth correspondence relationship, the terminal may obtain the third duration of the state. In this case, the terminal may stay or enter the sleep state, and lasts for the third duration.

Optionally, the method further includes:

when the third correspondence relationship is pre-configured or network-configured, obtaining, by the terminal, resource pool configuration information, and determining the third correspondence relationship according to the resource pool configuration information; and/or,
when the fourth correspondence relationship is pre-configured or network-configured, obtaining, by the terminal, resource pool configuration information, and determining the fourth correspondence relationship according to the resource pool configuration information.

Optionally, the method further includes:

when the third correspondence relationship is terminal-configured, obtaining, by the terminal, SCI, PCS-RRC signaling, MAC CE or MAC PDU, and determining the third correspondence relationship according to the SCI, PCS-RRC signaling, MAC CE or MAC PDU; and/or,
when the fourth correspondence relationship is terminal-configured, obtaining, by the terminal, SCI, PCS-RRC signaling, MAC CE or MAC PDU, and determining the fourth correspondence relationship according to the SCI, PCS-RRC signaling, MAC CE or MAC PDU.

Optionally, the second duration is pre-configured, network-configured, or terminal configured; and/or, the third duration is pre-configured, network-configured, or terminal configured.

Optionally, the method further includes:

when the second duration is pre-configured or network-configured, obtaining, by the terminal, resource pool configuration information, and determining the second duration according to the resource pool configuration information; and/or,
when the third duration is pre-configured or network-configured, obtaining, by the terminal, resource pool configuration information, and determining the third duration according to the resource pool configuration information.

Optionally, the method further includes:

when the second duration is terminal-configured, obtaining, by the terminal, SCI, PCS-RRC signaling, MAC CE or MAC PDU, and determining the second duration according to the SCI, PCS-RRC signaling, MAC CE or MAC PDU; and/or,
when the third duration is terminal-configured, obtaining, by the terminal, SCI, PCS-RRC signaling, MAC CE or MAC PDU, and determining the third duration according to the SCI, PCS-RRC signaling, MAC CE or MAC PDU.

Optionally, the terminal does not perform sequence detection in the sleep state. For example, if the terminal is configured not to perform sequence detection in the sleep state, the terminal enters the wake-up state when the first sequence is detected in slot 0, and the duration is 4 slots, and the terminal automatically goes to the sleep state in slot 5. The second sequence is detected in slot 6, indicating to enter the sleep state, and the duration is 6 slots, then the terminal is in the sleep state in slot 7 to slot 12, and the terminal does not perform sequence detection in slot 8 and slot 12.

Optionally, the terminal does not detect SCI in the sleep state.

Exemplarily, the terminal neither detects the sequence nor detects sidelink data such as SCI in the sleep state. For the case where the SCI carries indication information, the terminal does not detect the SCI in the sleep state.

Optionally, the sequence corresponding to the sidelink indication information is transmitted independently from other sidelink physical channel(s).

Optionally, the sequence corresponding to the sidelink indication information occupies 2 symbols in the time domain, and is located in the second last and third last sidelink symbols in a slot. Exemplarily, if a slot includes 14 Orthogonal Frequency Division Multiplexing (OFDM) symbols, the sequence may be located at the 12-th and 13-th sidelink symbols.

Optionally, the sequence corresponding to the sidelink indication information is the same as the sequence sent on the two symbols occupied in the time domain.

Optionally, the symbol before the first symbol for carrying the sequence corresponding to the sidelink indication information is a Guard Period (GP) symbol, and/or, a symbol following the last symbol for carrying the sequence corresponding to the sidelink indication information is a GP symbol.

Optionally, a candidate transmission resource for the sequence is periodic.

Optionally, when a transmission resource for Physical Sidelink Feedback Channel (PSFCH) and a transmission resource for the sequence are configured in a resource pool, a slot used to transmit the PSFCH is simultaneously used to transmit the sequence; or, a slot used to transmit the sequence is simultaneously used to transmit the PSFCH. Further, the sequence and the PSFCH occupy the same time-domain symbol(s).

Optionally, the sequence occupies M Physical Resource Blocks (PRBs) in the frequency domain, where M is an integer greater than or equal to 1.

Optionally, the M PRBs are contiguous PRBs, and a start position of the M PRBs in the frequency domain is obtained by performing a modulo operation on M using a PRB index. Exemplarily, the start PRB position occupied by the sequence is obtained according to mod (PRB_index, M)=0; wherein, mod( ) represents a modulo operation, and PRB_index represents a PRB index.

Optionally, the sequence is generated based on a root sequence, a cyclic shift value and a sequence length.

Exemplarily, based on the same root sequence and different cyclic shift values, different sequences may be obtained. For example, the above-mentioned first sequence and second sequence may be obtained based on the same root sequence and different cyclic shift values.

Exemplarily, different sequences may be obtained based on different root sequences. For example, the above-mentioned first sequence and second sequence may be generated based on different root sequences.

Optionally, it is determined based on a group number corresponding to the root sequence to enter the wake-up state or the sleep state.

Optionally, the sequence is determined according to at least one of the following: a source Identity (ID), a destination ID, and a group ID.

Optionally, the destination ID is an in-group ID of the terminal in a communication group. For example, in FIG. 3b, a communication group includes 4 terminals: UE1, UE2, UE3 and UE4, and their corresponding in-group IDs are ID #0, ID #1, ID #2 and ID #3 respectively. In this case, Different in-group terminals can respectively determine a corresponding sequence according to their corresponding in-group IDs. For example, for a case of 12 cyclic shift values, the first 6 cyclic shift values are used to indicate the wake-up state, and the last 6 cyclic shift values are used to indicate the sleep state. When the sequence is used to indicate the wake-up state, one of the first 6 cyclic shift values is determined based on the source ID, destination ID and/or group ID. When the sequence is used to indicate the sleep state, one of the last 6 cyclic shift values is determined according to the source ID, destination ID or group ID.

Optionally, a transmission resource for the sequence is determined according to at least one of the following: a source ID, a destination ID, and a group ID.

Optionally, the destination ID is an in-group ID of the terminal in a communication group. For example, there are N candidate transmission resources for the sequence (including frequency-domain resources and code-domain resources), and one transmission resource for transmitting the sequence transmission resource is determined among the N transmission resources according to the source ID, destination ID and/or group ID. Optionally, the source ID includes the ID of the terminal that sent the sequence.

Optionally, the destination ID includes at least one of the following:

an ID of a terminal receiving the sequence in an unicast communication;
a group ID in a groupcast communication;
an ID corresponding to a service type in a broadcast communication.

Optionally, the source ID is a source ID carried in the SCI, and the destination ID is a destination ID carried in the SCI.

Optionally, the group ID includes a group ID in a groupcast communication.

Optionally, the method further includes:

obtaining configuration information, wherein the configuration information is used to configure a transmission resource set for the sequence; and
determining a transmission resource for the sequence according to the configuration information.

Exemplarily, the configuration information is used to configure a candidate transmission resource set or an available/usable transmission resource set for the sequence. The terminal may determine a specific transmission resource according to other information, such as the source ID, destination ID or group ID.

Optionally, the configuration information is resource pool configuration information or bandwidth part (BWP) configuration information. Specifically, based on resource pool configuration information or sidelink BWP configuration information, configuration information for configuring a transmission resource carrying the sequence may be determined. Based on each resource pool or each sidelink BWP, the transmission resource carrying the sequence may be configured.

Optionally, the configuration information is pre-configured or network-configured.

Optionally, the configuration information includes at least one of the following parameters:

second indication information used to indicate whether it is supported to indicate the terminal to enter the wake-up state or sleep state via the sidelink indication information;

third indication information used to indicate whether detection of the sidelink indication information in the sleep state is needed;

time-domain resource indication information used to indicate a time-domain resource for the sequence that carries the sidelink indication information;

frequency-domain resource indication information used to indicate a frequency-domain resource for the sequence that carries the sidelink indication information;

a code-domain resource indication information used to indicate a code-domain resource for the sequence that carries the sidelink indication information;

wake-up duration indication information; and/or

sleep duration indication information.

Exemplarily, the second indication information may be used to indicate whether it is supported to indicate the terminal to enter the wake-up state or the sleep state via the sidelink indication information. If it is supported, whether the sidelink indication information indicates that the terminal enters the wake-up state or the sleep state is further determined. If not supported, subsequent determination may not be performed.

Exemplarily, the third indication information may be used to indicate whether the terminal needs to detect the sidelink indication information in the sleep state. If yes, the terminal detects the sidelink indication information even in the sleep state. Otherwise, the terminal does not detect the sidelink indication information in the sleep state. If the sidelink indication information is carried by the sequence, the third indication information indicates whether the terminal needs to perform sequence detection in the sleep state; if the sidelink indication information is carried by the SCI, the third indication information indicates whether the terminal needs to perform SCI detection in the sleep state.

Optionally, the time-domain resource indication information includes at least one of the following:

period information used to indicate a time domain period for transmitting the sidelink indication information; and

a slot offset used to determine a slot where the sidelink indication information is transmitted in a period.

Optionally, the time domain period being zero indicates that the function of indicating the terminal to enter the wake-up state or the sleep state via the sidelink indication information is not supported.

Optionally, the frequency-domain resource indication information includes at least one of the following:

the number of sub-channels, the number of PRBs, or the length of the sequence corresponding to the sequence carrying the sidelink indication information, used to determine the length of the sequence carrying the sidelink indication information; and

frequency-domain resource set indication information used to indicate a frequency-domain resource set that can be used for the sequence carrying the sidelink indication information.

For example, the frequency-domain resource set that can be used for the sequence carrying the sidelink indication information is indicated by means of a bitmap, or by indicating a frequency domain start position and length.

Optionally, the code-domain resource indication information includes at least one of the following:

root sequence indication information, used to determine a parameter for generating the root sequence;

cyclic shift indication information, used to determine the cyclic shift value; and

the number of cyclic shift pairs used to indicate the number of supported cyclic shift pairs;

Optionally, the wake-up duration indication information includes at least one of the following:

a second duration used to determine the duration of entering the wake-up state;

a correspondence relationship between a cyclic shift value and a wake-up duration; and

a correspondence relationship between a value of an information field used to indicate a duration carried in the SCI and the wake-up duration.

Optionally, the sleep duration indication information includes at least one of the following:

a third duration used to determine the duration of entering the sleep state;
a correspondence relationship between a cyclic shift value and a sleep duration; and
a correspondence relationship between a value of an information field used to indicate a duration carried in the SCI and the sleep duration.

Optionally, the sidelink indication information is carried by Sidelink Control Information (SCI).
Optionally, the SCI is a first- stage SCI or a second- stage SCI.
Optionally, the sidelink indication information is carried by an information field in the SCI.
Optionally, the manner in which the sidelink indication information is carried by the information field in the SCI includes at least one of the following:

the information field being the first value used to indicate that the terminal enters the wake-up state; or
the information field being a second value used to indicate that the terminal enters the sleep state.

For example, the information field occupies one bit, and the bit is 1 to indicate that the terminal enters the wake-up state, and 0 is used to indicate that the terminal enters the sleep state.
Optionally, the manner in which the sidelink indication information is carried by the information field in the SCI includes at least one of the following:

a first information field in the SCI being used to indicate the wake-up state or the sleep state;
a second information field in the SCI being used to indicate the second duration of the wake-up state or the third duration of the sleep state.

Exemplarily, the SCI includes a first information field. For example, the first information field occupies one bit, and is used to indicate the wake-up state or the sleep state.
Exemplarily, the SCI includes a first information field and a second information field. When the first information field indicates the wake-up state, the second information field indicates a wake-up duration; when the first information field indicates the sleep state, the second information field indicates a sleep duration. The second information field may represent different durations with multiple bits. For example, the second information domain includes 2 bits, a bit index value of 0 indicates 2 slots, a bit index value of 1 indicates 4 slots, a bit index value of 2 indicates 8 slots, and a bit index value of 3 indicates 16 slots. Optionally, the correspondence relationship between the value of the second information field and the second duration or the third duration is based on pre-configuration, network configuration or terminal configuration.
Optionally, the sidelink indication information is carried via an SCI format.
Optionally, a first SCI format corresponds to the wake-up state, and/or, a second SCI format corresponds to the sleep state. Exemplarily, if it is detected that the sidelink indication information is in the first SCI format, the terminal enters the wake-up state. If it is detected that the sidelink indication information is in the second SCI format, the terminal enters the sleep state.
Optionally, the sidelink indication information is carried by a scrambling sequence of the SCI.
Optionally, the scrambling sequence is used to scramble a first bit sequence, where the first bit sequence is a sequence generated according to an information bit of the SCI with a CRC sequence added. Exemplarily, the first bit sequence is generated by the information bit of the SCI with CRC sequence added. Bit(s) corresponding to the CRC sequence in the first bit sequence may be scrambled by using the scrambling sequence.
Optionally, the scrambling sequence is used to scramble a second bit sequence, where the second bit sequence is a bit sequence obtained by performing channel coding processing on the information bit of the SCI. Exemplarily, channel coding processing is performed on the information bit of the SCI to generate the second bit sequence. The second bit sequence may be scrambled by using the scrambling sequence.
Optionally, the scrambling sequence is used to indicate the second duration of the wake-up state and/or the third duration of the sleep state.
Optionally, the indication manner of the scrambling sequence includes at least one of the following:

when the scrambling sequence is generated by a first initial value, the scrambling sequence being used to indicate entering the wake-up state;
when the scrambling sequence is generated by a second initial value, the scrambling sequence being used to indicate entering the sleep state;

When the scrambling sequence is generated by a third initial value, the scrambling sequence being used to indicate the second duration of entering the wake-up state; and

when the scrambling sequence is generated by a fourth initial value, the scrambling sequence being used to indicate the third duration of entering the sleep state.

Optionally, an initial value of a scrambling sequence generator is determined by a first parameter. Exemplarily, a correspondence relationship between initial values of the scrambling sequence generator and states of the terminal, and a correspondence relationship with a duration for the terminal to enter each state may be preset or configured. The initial value of the scrambling sequence generator is used to generate the scrambling sequence. For example, the first initial value corresponds to the wake-up state; the second initial value corresponds to the sleep state; the third initial value corresponds to the second duration of the wake-up state, or called the wake-up duration; the fourth initial value corresponds to the third duration of the sleep state, or called the sleep duration. After receiving the scrambling sequence, the terminal parses the scrambling sequence, and determines an operation of the terminal according to the initial value for generating the scrambling sequence. For example, if the scrambling sequence is generated by the first initial value, the terminal enters the wake-up state. For another example, if the scrambling sequence is generated by the second initial value, the terminal enters the sleep state. For another example, if the scrambling sequence is generated by the third initial value, the terminal enters the wake-up state and keeps in the wake-up state for the second duration. For another example, if the scrambling sequence is generated by the fourth initial value, the terminal enters the sleep state and keeps in the sleep state for the third duration.

Optionally, receiving the sidelink indication information by the terminal includes: receiving, by the terminal, the sidelink indication information in a first time range.

Optionally, the method further includes:

determining, by the terminal, a start position of the first time range and/or an end position of the first time range according to a first time domain position.

Optionally, the method further includes:

Obtaining, by the terminal, configuration information of sidelink DRX; and

determining, by the terminal, the first time domain position according to the configuration information of sidelink DRX.

Optionally, the configuration information of the sidelink DRX includes a DRX on-duration timer (DRX_onDurationTimer ), and the first time domain position is determined according to a start time moment of the DRX on-duration timer , or a reset time moment of the DRX on-duration timer, or a time moment when the DRX on-duration timer comes into effect.

Exemplarily, the first time domain position may be a time domain position for starting or resetting the DRX on-duration timer.

Optionally, determining, by the terminal, the start position of the first time range according to the first time domain position, includes:

determining, by the terminal, the start position of the first time range according to the first time domain position and a first time interval; or,

determining, by the terminal, the first time domain position as the start position of the first time range.

Exemplarily, the terminal may determine the time domain position corresponding to the start of the DRX on-duration timer as the start position of the first time range for receiving the sidelink indication information, or the terminal may determine the start position of the first time range before or after the time domain position corresponding to the start of the DRX on-duration timer according to the first time interval.

Optionally, the first time interval is determined according to pre-configuration information, or determined according to network configuration information, or determined according to indication information of other terminal(s), or determined by the terminal.

Optionally, after the terminal determines the start position of the first time range according to the first time domain position, the method further includes:

determining, by the terminal, an end position of the first time range according to the start position of the first time range and a fourth duration.

Optionally, the fourth duration is a time domain length of the first time range.

Optionally, the fourth duration is determined according to pre-configuration information, or determined according to network configuration information, or determined according to indication information of other terminal(s), or determined by the terminal. That is to say, the time domain length of the first time range may be pre-configured or configured by the network, or may be indicated by other terminal(s) or determined by the terminal itself.

Optionally, determining, by the terminal, the end position of the first time range according to the first time domain position, including:

determining, by the terminal, a previous slot of the slot corresponding to the first time domain position as the end position of the first time range.

Exemplarily, the terminal may determine the previous slot of the time domain position corresponding to the start of the DRX on-duration timer as the end position of the first time range.

Optionally, after the terminal determines the end position of the first time range according to the first time domain position, the method further includes:

determining, by the terminal, the start position of the first time range according to the end position of the first time range and a fifth duration.

Optionally, the fifth duration is a time domain length of the first time range.

Optionally, the fifth duration is determined according to pre-configuration information, or determined according to network configuration information, or determined according to indication information of other terminal(s), or determined by the terminal. That is to say, the time domain length of the first time range may be pre-configured or configured by the network, or may be indicated by other terminal(s) or determined by the terminal itself.

In the embodiments of the present disclosure, the terminal is indicated to enter the wake-up state or the sleep state via the sidelink indication information, so that the terminal can go to the sleep state when there is no data reception, thereby reducing power consumption of the terminal and realizing power saving.

The following are specific examples in the embodiments of the present disclosure:

Example 1: a terminal receives indication information such as sidelink indication information, and enters a wake-up or a sleep (go-to-sleep) state according to the sidelink indication information.

The wake-up state may indicate that the terminal needs to perform sidelink data reception or measurement; the sleep state may indicate that the terminal does not need to perform sidelink data reception or measurement.

For example, the wake-up state is a DRX On Duration state, and the terminal performs sidelink data reception or measurement during the On Duration period; the sleep state is a DRX Off Duration state, and the terminal does not perform sidelink data reception or measurement during this period.

For another example, the wake-up state is a state that the terminal enters the DRX On Duration, and the terminal performs sidelink data reception or measurement during the On Duration period; the sleep state is a state that the terminal does not enter the DRX On Duration.

Optionally, if the sidelink indication information is not detected or found by the terminal, the terminal maintains the current state. For example, if the sidelink indication information is detected by the terminal, the terminal enters the DRX On Duration state; otherwise, it does not enter the DRX On Duration state.

Optionally, the sidelink indication information is called a wake-up signal (or sleep signal), and the terminal is indicated to wake up or go to sleep via the sidelink indication information.

Optionally, the terminal receives the sidelink indication information and enters the wake-up or sleep state after T+Tproc time, where: T is the time moment when the terminal receives the sidelink indication information, for example, it is the time moment corresponding to the first time-domain symbol or the last time-domain symbol carrying the sidelink indication information; Tproc is the processing time of the terminal, for example, the time for the terminal to perform sequence detection. Optionally, the terminal enters the wake-up state or sleep state in the first slot after the T+Tproc time. For example, if the terminal receives sidelink indication information in slot n, but the processing time Tproc is 3 time-domain symbols, then the terminal enters the wake-up or sleep state in slot n+1. For convenience, the following examples assume Tproc=0.

Example 1-1: the sidelink indication information is carried by a sequence. When the sidelink indication information is a first sequence, the terminal enters the wake-up state; when the sidelink indication information is a second sequence, the terminal enters the sleep state.

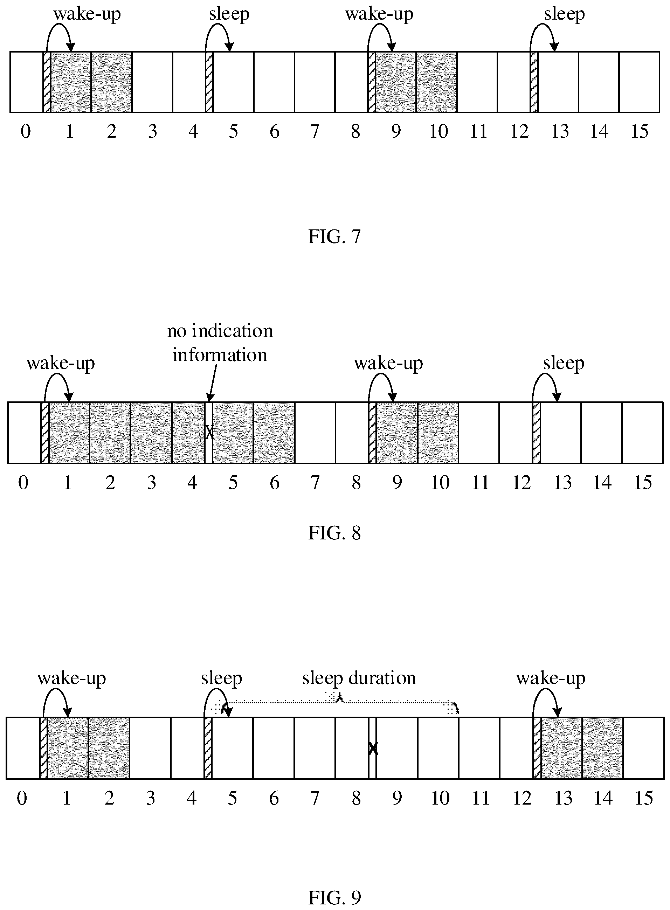

For example, as shown in FIG. 7, the sending period of the sequence carrying the sidelink indication information is configured as 4 slots, that is, the terminal performs sequence detection every 4 slots. Whether to enter the wake-up state or the sleep state is determined based on the detected sequence. Since there are only two states, two sequences may be pre-configured to correspond to the two states respectively. When the first sequence is detected, the terminal enters the wake-up state; when the second state is detected, the terminal enters the sleep state.

In FIG. 8, the sending period of the sequence carrying the sidelink indication information is 4 slots, that is, the terminal performs sequence detection every 4 slots. When the first sequence is detected in slot 0, the terminal enters the wake-up state, lasting for 6 slots. That is, the terminal performs sidelink data reception or measurement in slot 1 to slot 6. No sequence is detected in slot 4, and the terminal maintains the current state, i.e., the wake-up state. After the slot 6, the wake-up period ends and the terminal automatically enters the sleep state. The wake-up state is detected in slot 8, lasting for 2 slots. That is, the terminal enters the wake-up state in slots 9 and 10. After the slot 10, the terminal automatically enters the sleep state. When the second sequence is detected in the slot 12, indicating to enter the sleep state, the terminal continues to maintain the sleep state.

Optionally, the duration T1 for entering the wake-up state and the duration T2 for entering the sleep state are configurable or may be stipulated by a protocol. In the case of being configurable, the parameters may be pre-configured, network-configured or terminal configured (for example, the parameters may be configured by a terminal that sends the sidelink indication information sequence). T1 and T2 may be configured independently.

Optionally, the duration T1 for entering the wake-up state and the duration T2 for entering the sleep state are also determined by the sequence.

For example, for the same root sequence, multiple sequences may be generated by different cyclic shifts. For example, for a 12-point long sequence, 12 different sequences may be generated according to the cyclic shift; for a 24-point long sequence, a 24-point long sequence may be generated according to the cyclic shift. For a 12-point long sequence, the value range of the cyclic shift is [0,11]. When the value is [0,5], it means entering the wake-up state; when the value is [6,11], it means entering the sleep state. And different values correspond to different durations T1 and T2. The correspondence relationship between the values of the cyclic shift and the durations may be pre-configured, network-configured or terminal-configured, as shown in Table 1 below:

Table 1: Example of a correspondence relationship between cyclic shift values, wake-up/sleep state, and duration

| cyclic shift value | 0 | 1 | 2 | 3 | 4 | 5 | 6 | 7 | 8 | 9 | 10 | 11 |
|---|---|---|---|---|---|---|---|---|---|---|---|---|
| State | wake-up | | | | | | sleep | | | | | |
| T1 (slot) | 1 | 2 | 4 | 8 | 16 | 32 | / | / | / | / | / | / |
| T2 (slot) | / | / | / | / | / | / | 1 | 2 | 4 | 8 | 16 | 32 |

The terminal performing sequence detection uses sequences corresponding to different cyclic shift values to perform detection, so as to determine whether to enter the wake-up state or the sleep state, and the duration of the wake-up state or the sleep state.

It should be noted that the above table only schematically illustrates the correspondence relationship between the cyclic shift values and the durations, and does not constitute a specific limitation. Different correspondence relationships may also be configured. For example, for a 12-point long sequence, only configure sequences corresponding to 4 cyclic shift values, that is, the cyclic shift value 0/3/6/9, where the sequence corresponding to 0/3 indicated entering the wake-up state, and the sequence corresponding to 6/9 indicates entering the sleep state, and the corresponding durations are shown in Table 2 below.

Table 2: An example of the correspondence relationship between the cyclic shift values, wake-up/sleep state, and durations:

| cyclic shift value | 0 | 3 | 6 | 9 |
|---|---|---|---|---|
| state | wake-up | | sleep | |
| T1 (slot) | 4 | 8 | / | / |
| T2 (slot) | / | / | 4 | 8 |

Optionally, a cyclic shift pair may be defined. If the maximum number of cyclic shifts supported is K, the cyclic shift values k and k+K/2 are a cyclic shift pair, where k=0,1,...,K/2-1. A cyclic shift value less than K/2 indicates entering the wake-up state, and a cyclic shift value greater than or equal to K/2 indicates entering the sleep state.

In the above example, the terminal does not detect the Physical Sidelink Control CHannel (PSCCH)/ Physical Sidelink Shared CHannel (PSSCH) in the sleep state. However, the terminal still detects the sequence carrying the sidelink indication information to determine whether a state change is required. Optionally, the terminal does not perform sequence detection in the sleep state. As shown in FIG. 9, the sending period of the sequence carrying the sidelink indication information is 4 slots, that is, the terminal performs sequence detection every 4 slots. When the first sequence is detected in slot 0, the terminal enters the wake-up state, lasting for 2 slots, that is, the terminal performs sidelink data reception or measurement in slot 1 to slot 2, and the terminal automatically goes to the sleep state in slot 3. The second sequence is detected in slot 4, which indicates entering the sleep state, and lasting for 6 slots, then the terminal device goes to the sleep state in slot 5 to slot 10, and sequence detection is not performed in slot 8. After slot 10, sequence detection is be restarted. When the first sequence is detected in slot 12, indicating to enter the wake-up state and last for 2 slots, the terminal enters the wake-up state in slots 13 and slot 14 and automatically goes to the sleep state in slot 15.

Example 1-2: the sidelink indication information is carried by the SCI.

Optionally, the SCI is a first- stage or second- stage SCI.

Specifically, the sidelink indication information may be carried in the following ways:

Example 1-2-1: carrying by an information field in the SCI: when the information field is a first value, the terminal enters the wake-up state; when the information field is a second value, the terminal enters the sleep state.

Optionally, the SCI is also used to indicate the wake-up duration T1 and the sleep duration T2.

The SCI includes an information field, where the information field is used to indicate an index value, and the wake-up duration T1 or the sleep duration T2 is determined according to the index value and a first correspondence relationship. For example, in the SCI, a 1-bit first information field is used to indicate whether to wake up or sleep, and a 3-bit second information field is also included to indicate the wake-up duration T1 or the sleep duration T2. When the first information field indicates wake-up, the second information field is used to indicate the wake-up duration. When the first information field indicates sleep, the second information field indicates the sleep duration. The correspondence relationship between the value of the 3-bit and the duration may be pre-configured, network-configured or terminal-configured. An example can be found in Table 3.

Table 3

| 3-bit index value | 0 | 1 | 2 | 3 | 4 | 5 | 6 | 7 |
|---|---|---|---|---|---|---|---|---|
| T1 or T2 (slot) | 1 | 2 | 4 | 8 | 16 | 32 | 64 | 128 |

Example 1-2-2: carrying by a scrambling sequence of SCI:

Scheme 1: a sequence obtained by appending a CRC sequence $p_0, p_1, p_2, p_3, ..., p_{L-1}$ to information bits $a_0, a_1, a_2, a_3, ..., a_{A-1}$ of the SCI is $b_0, b_1, b_2, b_3, ..., b_{k-1}$, where:

$$b_k = a_k; \text{ where } k = 0, 1, 2, \ldots, A - 1$$

$$b_k = p_{k-A}; \text{ where } k = A, A + 1, A + 2, \ldots, A + L - 1.$$

In the above formula, $K = A + L$, A represents the length of the SCI information bits, and L=24 represents the length of the CRC sequence.

The bits corresponding to the CRC sequence in $b_0, b_1, b_2, b_3, ..., b_{k-1}$ are scrambled using a scrambling sequence $x_0, x_1, ..., x_{B-1}$. If B=L, the bits corresponding to the CRC sequence in $b_0, b_1, b_2, b_3, ..., b_{K-1}$ are scrambled using the scrambling sequence. If B<L, the last B bits of the CRC sequence in $b_0, b_1, b_2, b_3, ..., b_{K-1}$ are scrambled using the scrambling sequence. Taking B=L=24 as an example below:

$$c_k = b_k; \text{ where } k = 0, 1, 2, \ldots, A - 1;$$

$$c_k = (b_k + x_k) \bmod 2; \text{ where } k = A, A + 1, A + 2, ..., A + 23.$$

By carrying the sidelink indication information in the sequence, an exemplary correspondence relationship is shown in Table 4:

Table 4

| $x_0, x_1, ..., x_{23}$ | state |
|---|---|
| 0,0,0,0,0,0,0,0,0,0,0,0,0,0,0,0,0,0,0,0,0,0,0,0 | sleep |
| 1,1,1,1,1,1,1,1,1,1,1,1,1,1,1,1,1,1,1,1,1,1,1,1 | wake-up |

Optionally, the above scrambling sequence may also be used to carry the wake-up duration T1 or sleep duration T2, as shown in Table 5 below:

Table 5

| $x_0, x_1, ..., x_{23}$ | T1 (slot) | T2 (slot) | state |
|---|---|---|---|
| 0,0,0,0,0,0,0,0,0,0,0,0,0,0,0,0,0,0,0,0,0,0,0,0 | 4 | / | sleep |
| 0,1,0,1,0,1,0,1,0,1,0,1,0,1,0,1,0,1,0,1,0,1,0,1 | 8 | / | |
| 1,0,1,0,1,0,1,0,1,0,1,0,1,0,1,0,1,0,1,0,1,0,1,0 | / | 4 | wake-up |
| 1,1,1,1,1,1,1,1,1,1,1,1,1,1,1,1,1,1,1,1,1,1,1,1 | / | 8 | |

Scheme 2: the bit sequence d(0), ..., $d(M_{bit}$ - 1) of the SCI after channel coding needs scrambling processing, and the scrambling sequence is c(0), ..., $c(M_{bit}$ - 1).

$$\tilde{b}(i) = (b(i) + c(i)) \bmod 2$$

The initial value $c_{init}$ of the scrambling sequence generator is determined by a first initial value or a second initial value. When the scrambling sequence is determined by the first initial value (such as 1), it means entering the wake-up state. When the scrambling sequence is determined by the second initial value (such as 0), it means entering the sleep state.

Optionally, the duration T1 for entering the wake-up state or the duration T2 for entering the sleep state may be determined according to the scrambling sequence. When the scrambling sequence is determined by a third initial value, it indicates the duration T1 for entering the wake-up state. When the scrambling sequence is determined by a fourth initial value, it indicates the duration T2 for entering the sleep state. For example, the initial value $c_{init}$ of the scrambling sequence generator is determined by a value set, and the set includes K elements. When $c_{init}$ is determined by a value corresponding to element indexes 1, 2,..., K/2, it means entering the wake-up state, and different indexes correspond to corresponding durations T1. When $c_{init}$ is determined by a value corresponding to element index K/2+1,K/2+2, ...,K, it means entering the sleep state, and different indexes correspond to corresponding durations T2.

Example 1-2-3: carrying by SCI format.

A variety of SCI formats are defined in NR-V2X. For example, two second-stage SCIs are defined, namely, SCI format 2A and SCI format 2B. Different SCI formats may be used to carry sidelink indication information. When SCI format 2A is used, it indicates entering the wake-up state. When SCI format 2B is used, it indicates entering the sleep state.

Example 2: Structure of a sequence carrying sidelink indication information

(1) Time domain

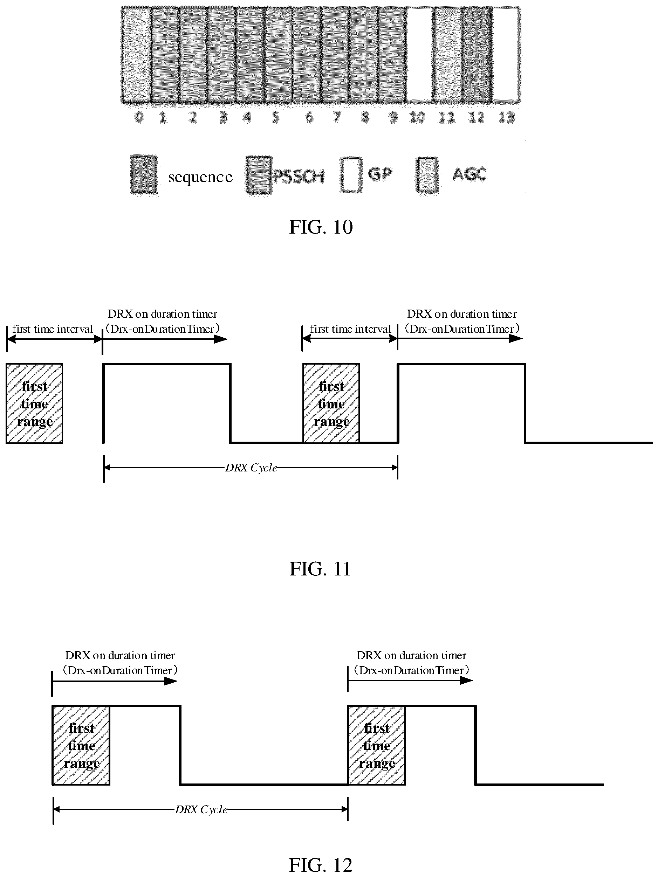

When the sidelink indication information is carried by a sequence, the sequence may be transmitted independently from other sidelink physical channel(s), and the sequence occupies 2 symbols in the time domain. As shown in FIG. 10, the two symbols may be located in the second last and third last sidelink symbols in a slot, and a previous symbol of symbols carrying the sequence (that is, the fourth last sidelink symbol) is GP, used for switching between transmission and reception with the PSSCH channel in the slot.

Optionally, the same sequence is sent on the 2 symbols, where the first symbol is used as AGC.

Optionally, a candidate transmission resource for the sidelink indication information is periodic. If the period is P, it means that every P slots include a slot that can be used to transmit the sidelink indication information.

Optionally, the slot for transmitting the sequence may also be used for transmitting the PSFCH, or the slot for transmitting the PSFCH may also be used for transmitting the sequence; that is, the PSFCH and the sequence are located in the same slot, and furthermore, located in the same time-domain symbol(s).

(2) Frequency Domain

The sequence corresponding to the sidelink indication information occupies M PRBs in the frequency domain. Optionally, the M PRBs are contiguous PRBs. The start position in the frequency domain is the PRB_index corresponding to mod(PRB_index, M)=0, that is, the start PRB index in the frequency domain is 0, M, 2M, and so on;

(3) Sequence

The sequence carrying the sidelink indication information may be expressed as:

$$r(n) = e^{j\alpha n}\bar{r}(n), \quad 0 \le n < M_{ZC}$$

where $M_{ZC} = M * N_{sc}^{RB}$ represents the sequence length, $\bar{r}(n)$ represents the root sequence, $\alpha$ represents the cyclic shift, and $N_{sc}^{RB}$ represents the number of subcarriers included in one RB.

Optionally, the root sequence may be determined according to a pre-configured or network-configured parameter. The cyclic shift value is used to determine entry into the wake-up state or the sleep state. Further, the cyclic shift value is used to determine the wake-up duration T1 or the sleep duration T2.

Optionally, the root sequence is used to determine entry into the wake-up state or the sleep state.

Optionally, the sequence carrying the sidelink indication information is determined according to at least one of the following: source ID, destination ID, and group ID.

Optionally, the destination ID is an in-group ID of the terminal in a communication group. The in-group ID of the terminal may be obtained according to higher layer configuration information.

The source ID is, for example, the ID of a terminal that transmits the sequence in a unicast communication. In a unicast communication, two UEs performing unicast communication can know the ID information of the opposite terminal, and thus the terminal receiving the sequence can determine the source ID according to the ID of the opposite terminal, and detect the corresponding sequence according to the ID information.

The destination ID is, for example, the ID corresponding to a terminal receiving the sequence in a unicast communication. The receiving terminal determines the destination ID according to its own ID information, and detects a corresponding sequence according to the ID information. For example, the destination ID information is a group ID in a groupcast communication, and all terminals performing the groupcast communication can know the group ID, and thus the destination ID may be determined according to the group ID information, and a corresponding sequence may be detected according to the ID information. For another example, the destination ID information is the ID corresponding to a service type in a broadcast communication. A terminal performing broadcast communication determines the destination ID according to a service type of interest or a service type that needs to be received, and detects the corresponding sequence according to the ID information.

Optionally, the source ID and destination ID are the source ID and destination ID carried in the SCI.

A source ID and a destination ID are carried in the second-stage SCI, and the source ID or destination ID is determined according to higher layer ID information. For example, the higher layer ID corresponds to 24 bits, the source ID is 8 bits truncated from the higher layer source ID, and the destination ID is 16 bits truncated from the higher layer destination ID.

Example 3: Configuring a transmission resource for the sequence carrying sidelink indication information

The transmission resource for the sequence carrying the sidelink indication information may be determined according to resource pool configuration information, or according to sidelink BWP configuration information. That is, the transmission resource is configured per resource pool or per sidelink BWP.

Optionally, the transmission resource may be pre-configured or configured by the network.

A parameter used to determine the transmission resource for the sequence carrying the sidelink indication information includes at least one of the following:

second indication information: used to indicate whether to support this function, that is, whether to support indicating the terminal to enter the wake-up state or the sleep state via the sidelink indication information;

third indication information: indicating whether it is needed to detect a sequence carrying sidelink indication information in the sleep state, wherein the sidelink indication information is used to indicate the terminal to enter the wake-up state or the sleep state;

time-domain resource indication information: including at least one of the following information:

(1) period P: that is, the time domain period for transmitting the sidelink indication information; optionally, if the period P=0, it means that the function of indicating the terminal to enter the wake-up state or the sleep state via the sidelink indication information is not supported;

(2) slot offset: used to determine a slot where the sidelink indication information is transmitted in one period;

frequency-domain resource indication information: including at least one of the following information:

(1) the number of sub-channels, the number of PRBs, or a sequence length corresponding to the sequence: used to determine the length of the sequence carrying the sidelink indication information;
(2) usable frequency-domain resource: indicating a frequency-domain resource set that can be used to transmit the sequence for the sidelink indication information; specifically, indication may be made via a bitmap, or by indicating a frequency-domain start position and length;

code-domain resource indication information: including at least one of the following information:

(1) root sequence indication information: used to determine a parameter for generating the root sequence;
(2) cyclic shift indication information: used to determine a cyclic shift value;
(3) number of cyclic shift pairs: used to indicate the number of supported cyclic shift pairs;

wake-up duration T1: used to determine the duration of entering the wake-up state;
sleep duration T2: used to determine the duration of entering the sleep state;
a correspondence relationship between a cyclic shift value and a wake-up duration;
a correspondence relationship between a cyclic shift value and a sleep duration;
a correspondence relationship between a value of an information field carried in SCI used to indicate the duration and the wake-up duration; and/or
a correspondence relationship between a value of the information field carried in SCI used to indicate the duration and the sleep duration.

Example 4: First time range for receiving sidelink indication information

The first time range is a time range for receiving the sidelink indication information. In practical applications, the first time range may be determined by the terminal according to information such as configuration information or a predetermined time domain position and duration.

Optionally, the terminal may determine the start position of the first time range and/or the end position of the first time range according to a first time domain position.

Optionally, the first time domain position may be determined according to configuration information of sidelink DRX. The configuration information of the sidelink DRX may be pre-configured or configured by the network.

Optionally, the configuration information of the sidelink DRX includes a DRX on-duration timer (DRX_onDurationTimer), and the first time domain position is determined according to a start time moment of the DRX on-duration timer, a reset time moment of the DRX on-duration timer, or a time moment when the DRX on-duration timer comes into effect. For example, the first time domain position may include a time domain position corresponding to the start, reset or entry into effect of the DRX on-duration timer. The first time domain position may also be determined based on the time domain position corresponding to the start, reset or entry into effect of the DRX on-duration timer and a predetermined time interval.

For convenience of description, an optional implementation of determining the first time range by using the first time domain position will be described below by taking the first time domain position including the time domain position corresponding to start or restart of the DRX on-duration timer as an example.

In an optional implementation, determining, by the terminal, the start position of the first time range according to the first time domain position, includes:

determining, by the terminal, the start position of the first time range according to the first time domain position and the first time interval; or,
determining, by the terminal, the first time domain position as the start position of the first time range.

As shown in FIG. 11, the terminal may determine the start position of the first time range before the time domain position corresponding to the start or restart of the DRX on-duration timer according to the first time interval. It can be understood that in practical applications, the terminal may also determine the start position of the first time range after the time domain position corresponding to the start or restart of the DRX on-duration timer according to the first time interval.

As shown in FIG. 12, the terminal may determine the time domain position corresponding to the start or restart of the DRX on-duration timer as the start position of the first time range for receiving the sidelink indication information.

The first time interval may be determined according to pre-configuration information, or determined according to network configuration information, or determined according to indication information of other terminal(s), or determined by the terminal.

Further, when the terminal determines the start position of the first time range according to the first time domain position, the terminal may also determine the end position of the first time range according to the first time domain position. For example, the terminal may determine the end position of the first time range according to the first time domain position and a second time interval. Alternatively, the terminal may determine the end position of the first time range according to the start position of the first time range and a fourth duration. The fourth duration may be a time domain length of the first time range.

Optionally, the fourth duration may be pre-configured or configured by the network, or may be indicated by other terminal(s) or determined by the terminal itself.

In another optional manner, determining, by the terminal the end position of the first time range according to the first time domain position, includes:

determining, by the terminal, a previous slot of the slot corresponding to the first time domain position as the end position of the first time range.

For example, the terminal may determine the previous slot of the time domain position corresponding to the start of the DRX on-duration timer as the end position of the first time range.

Further, when the terminal determines the end position of the first time range according to the first time domain position, the terminal may also determine the start position of the first time range according to the first time domain position. For example, the terminal may determine the start position of the first time range according to the first time domain position and a third time interval. Alternatively, the terminal may determine the start position of the first time range according to the end position of the first time range and a fifth duration. The fifth duration is the time domain length of the first time range.

Optionally, the fifth duration may be pre-configured or configured by the network, or may be indicated by other terminal(s) or determined by the terminal itself.

In the embodiments of the present disclosure, the sequence or SCI carrying sidelink indication information indicates whether the terminal needs to enter the wake-up state or the sleep state, which can enable the terminal to go to the sleep state when there is no data reception, thereby reducing the power consumption of the terminal, and thus achieving power saving purpose.

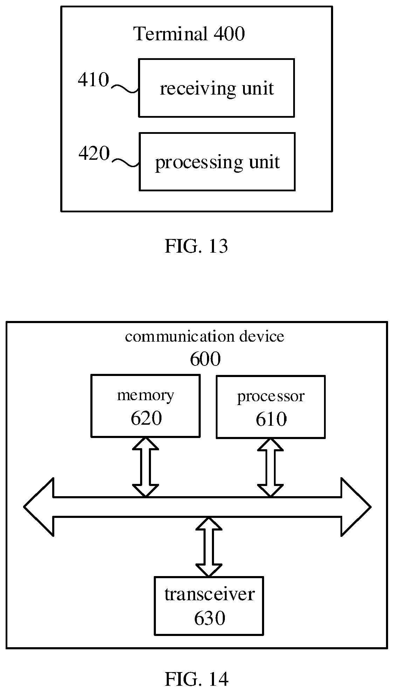

FIG. 13 is a schematic block diagram of a terminal 400 according to an embodiment of the present disclosure. The terminal 400 may include a receiving unit 410 and a processing unit 420.

The receiving unit 410 is configured to receive, by the terminal, sidelink indication information.

The processing unit 420 is configured to enter a wake-up state or a sleep state according to the sidelink indication information.

Optionally, the wake-up state indicates that the terminal needs to perform sidelink data reception or measurement, and the sleep state indicates that the terminal does not need to perform sidelink data reception or measurement.

Optionally, the sidelink indication information is a wake-up signal, and the wake-up signal is used to indicate the terminal to enter the wake-up state.

Optionally, the sidelink indication information is a sleep signal, and the sleep signal is used to indicate the terminal to enter the sleep state.

Optionally, the processing unit 420 is further configured to:

determine a time moment to enter the wake-up state or the sleep state based on a time moment when the sidelink indication information is received.

Optionally, the time moment when the sidelink indication information is received by the terminal is a time moment corresponding to the first time-domain symbol or the last time-domain symbol carrying the sidelink indication information.

Optionally, the processing unit 420 is further configured to:

determine a first duration based on processing time of the terminal.

Optionally, the processing time of the terminal is determined based on time for the terminal to perform sequence detection or sidelink channel detection.

Optionally, the processing unit 420 is further configured to:

enter the wake-up state or the sleep state in the first slot after the sidelink indication information is received for the first duration.

Optionally, the processing unit 420 is further configured to:

obtain first indication information, and determine a time interval, the number of slots, or a slot offset according to the first indication information.

Optionally, the processing unit 420 is further configured to:

obtain the first indication information according to pre-configuration information, network configuration information, or sidelink data sent by another terminal.

Optionally, the processing unit 420 is further configured to:

determine a slot for entering the wake-up state or the sleep state according to a slot where the sidelink indication information is located and the number of slots or the slot offset.

Optionally, the sidelink indication information is carried by a sequence.

Optionally, the processing unit 420 is further configured to:

when the sequence is a first sequence, enter the wake-up state; and/or
when the sequence is a second sequence, enter the sleep state.

Optionally, the processing unit 420 is further configured to:

when the sequence is the first sequence, determine a second duration for entering the wake-up state; and/or
when the sequence is the second sequence, determine a third duration for entering the sleep state.

Optionally, the first sequence corresponds to a first cyclic shift value, and/or the second sequence corresponds to a second cyclic shift value.

Optionally, the first cyclic shift value has a first correspondence relationship with the wake-up state, and/or, the second cyclic shift value has a second correspondence relationship with the sleep state.

Optionally, the first correspondence relationship is pre-configured, network-configured, or terminal-configured, and/or the second correspondence relationship is pre-configured, network-configured, or terminal-configured.

Optionally, the processing unit 420 is further configured to:

when the first correspondence relationship is pre-configured or network-configured, obtain resource pool configuration information, and determine the first correspondence relationship according to the resource pool configuration information; and/or
when the second correspondence relationship is pre-configured or network-configured, obtain resource pool configuration information, and determine the second correspondence relationship according to the resource pool configuration information.

Optionally, the processing unit 420 is further configured to:

when the first correspondence relationship is terminal-configured, obtain Sidelink Control Information (SCI), PCS-Radio Resource Control (PCS-RRC) signaling, Medium Access Control Control Element (MAC CE) or MAC Protocol Data Unit (PDU), and determining the first correspondence relationship according to the SCI, the PC5-RRC signaling, the MAC CE or the MAC PDU; and/or
when the second correspondence relationship is terminal-configured, obtain SCI, PCS-RRC signaling, MAC CE or MAC PDU, and determining the second correspondence relationship according to the SCI, the PC5-RRC signaling, the MAC CE or the MAC PDU.

Optionally, the first cyclic shift value has a third correspondence relationship with the second duration of the wake-up state, and/or the second cyclic shift value has a fourth correspondence relationship with the third duration of the sleep state.

Optionally, the third correspondence relationship is pre-configured, network-configured or terminal-configured, and/or the fourth correspondence relationship is pre-configured, network-configured or terminal-configured.

Optionally, the processing unit 420 is further configured to:

when the third correspondence relationship is pre-configured or network-configured, obtain resource pool configuration information, and determine the third correspondence relationship according to the resource pool configuration information; and/or
when the fourth correspondence relationship is pre-configured or network-configured, obtain resource pool configuration information, and determine the fourth correspondence relationship according to the resource pool configuration information.

Optionally, the processing unit 420 is further configured to:

when the third correspondence relationship is terminal-configured, obtain SCI, PCS-RRC signaling, MAC CE or MAC PDU, and determine the third correspondence relationship according to the SCI, PCS-RRC signaling, MAC CE or MAC PDU; and/or,
when the fourth correspondence relationship is terminal-configured, obtain SCI, PCS-RRC signaling, MAC CE or MAC PDU, and determine the four correspondence relationship according to the SCI, PCS-RRC signaling, MAC CE or MAC PDU.

Optionally, the second duration is pre-configured, network-configured or terminal-configured, and/or the third duration is pre-configured, network-configured or terminal-configured configured.

Optionally, the processing unit 420 is configured to:

when the second duration is pre-configured or network-configured, obtain resource pool configuration information, and determine the second duration according to the resource pool configuration information; and/or
when the third duration is pre-configured or network-configured, obtain resource pool configuration information, and determine the third duration according to the resource pool configuration information.

Optionally, the processing unit 420 is configured to:

when the second duration is terminal-configured, obtain SCI, PCS-RRC signaling, MAC CE or MAC PDU, and determine the second duration according to the SCI, PCS-RRC signaling, MAC CE or MAC PDU; and/or
when the third duration is terminal-configured, obtain SCI, PCS-RRC signaling, MAC CE or MAC PDU, and determine the third duration according to the SCI, PCS-RRC signaling, MAC CE or MAC PDU.

Optionally, the terminal does not perform sequence detection in the sleep state.
Optionally, the terminal does not detect SCI in the sleep state.
Optionally, the sequence corresponding to the sidelink indication information is transmitted independently from other sidelink physical channel.
Optionally, the sequence corresponding to the sidelink indication information occupies two symbols in a time domain, and is located in the second last and third last sidelink symbols in a slot.
Optionally, the same sequence is transmitted on two symbols in the time domain occupied by the sequence corresponding to the sidelink indication information.
Optionally, a symbol preceding the first symbol for carrying the sequence corresponding to the sidelink indication information is a Guard Period (GP) symbol, and/or a symbol following the last symbol for carrying the sequence corresponding to the sidelink indication information is a GP symbol.
Optionally, a candidate transmission resource for the sequence is periodic.
Optionally, when a transmission resource for a Physical Sidelink Feedback Channel (PSFCH) and a transmission resource for the sequence are configured in a resource pool, a slot used for transmitting the PSFCH is simultaneously used for transmitting the sequence, or the slot used for transmitting the sequence is simultaneously used for transmitting the PSFCH.
Optionally, the sequence occupies M Physical Resource Blocks (PRBs) in a frequency domain, where M is an integer greater than or equal to 1.
Optionally, the M PRBs are contiguous PRBs, and a start position of the M PRBs in the frequency domain is obtained by performing a modulo operation on M using a PRB index.
Optionally, the sequence is generated based on a root sequence, a cyclic shift value and a sequence length.
Optionally, it is determined based on a group number corresponding to the root sequence to enter the wake-up state or the sleep state.
Optionally, the sequence is determined according to at least one of the following: a source identity (ID), a destination ID, and a group ID.
Optionally, a transmission resource for the sequence is determined according to at least one of the following: a source ID, a destination ID, and a group ID.
Optionally, the source ID including an ID of a terminal which transmits the sequence.
Optionally, the destination ID includes at least one of the following:

an ID of a terminal that receives the sequence in a unicast communication;
a group ID in a groupcast communication;
an ID corresponding to a service type in a broadcast communication.

Optionally, the source ID is a source ID carried in the SCI, and the destination ID is a destination ID carried in the SCI.
Optionally, the group ID includes a group ID in a groupcast communication.
Optionally, the terminal further includes:

obtaining configuration information, wherein the configuration information is used to configure a transmission resource set for the sequence; and
determining a transmission resource for the sequence according to the configuration information.

Optionally, the configuration information is resource pool configuration information or bandwidth part (BWP) configuration information.

Optionally, the configuration information is pre-configured or network-configured.

Optionally, the configuration information includes at least one of the following parameters:

second indication information used to indicate whether it is supported to indicate the terminal to enter the wake-up state or sleep state via the sidelink indication information;
third indication information used to indicate whether detection of the sidelink indication information is needed in the sleep state;
time-domain resource indication information used to indicate a time-domain resource for the sequence carrying the sidelink indication information;
frequency-domain resource indication information used to indicate a frequency-domain resource for the sequence carrying the sidelink indication information;
code-domain resource indication information used to indicate a code-domain resource for the sequence carrying the sidelink indication information;
wake-up duration indication information; and
sleep duration indication information.

Optionally, the time-domain resource indication information includes at least one of the following:

period information used to indicate a time domain period for transmitting the sidelink indication information; and/or
optionally, a slot offset used to determine a slot where the sidelink indication information is transmitted in a period.

Optionally, the time domain period being zero indicates that a function of indicating the terminal to enter the wake-up state or the sleep state via the sidelink indication information is not supported.

Optionally, the frequency-domain resource indication information includes at least one of the following:

the number of sub-channels, the number of PRBs, or a sequence length corresponding to the sequence carrying the sidelink indication information, used to determine a length of the sequence carrying the sidelink indication information; and
frequency-domain resource set indication information used to indicate a frequency-domain resource set usable for the sequence carrying the sidelink indication information.

Optionally, the code-domain resource indication information includes at least one of the following:

root sequence indication information used to determine a parameter for generating the root sequence;
cyclic shift indication information used to determine a cyclic shift value;
the number of cyclic shift pairs used to indicate the number of supported cyclic shift pairs;
optionally, the wake-up duration indication information includes at least one of the following:

a second duration used to determine a duration of entering the wake-up state;
a correspondence relationship between a cyclic shift value and a wake-up duration; and
a correspondence relationship between a value of an information field used to indicate a duration carried in the SCI and the wake-up duration.

Optionally, the sleep duration indication information includes at least one of the following:

a third duration used to determine a duration of entering the sleep state;
a correspondence relationship between a cyclic shift value and a sleep duration; and
a correspondence relationship between a value of an information field used to indicate a duration carried in the SCI and the sleep duration.

Optionally, the sidelink indication information is carried by Sidelink Control Information (SCI).

Optionally, the SCI is a first-stage SCI or a second-stage SCI.

Optionally, the sidelink indication information is carried by an information field in the SCI.

Optionally, carrying of the sidelink indication information by the information field in the SCI includes at least one of the following:

the information field being a first value used to indicate that the terminal enters the wake-up state; or
the information field being a second value used to indicate that the terminal enters the sleep state.

Optionally, carrying of the sidelink indication information by the information field in the SCI includes at least one of the following:

a first information field in the SCI being used to indicate the wake-up state or the sleep state; and
a second information field in the SCI being used to indicate the second duration of the wake-up state or the third duration of the sleep state.

Optionally, the sidelink indication information is carried by an SCI format.
Optionally, a first SCI format corresponds to the wake-up state, and/or a second SCI format corresponds to the sleep state.
Optionally, the sidelink indication information is carried by a scrambling sequence of the SCI.
Optionally, the scrambling sequence is used to scramble a first bit sequence, wherein the first bit sequence is generated according to an information bit of the SCI with a CRC sequence added.
Optionally, the scrambling sequence is used to scramble a second bit sequence, wherein the second bit sequence is a bit sequence obtained after channel coding processing of an information bit of the SCI.
Optionally, the scrambling sequence is used to indicate a second duration of the wake-up state and/or a third duration of the sleep state.
Optionally, an indication manner of the scrambling sequence includes at least one of the following:

when the scrambling sequence is generated by a first initial value, the scrambling sequence being used to indicate entering the wake-up state;
when the scrambling sequence is generated by a second initial value, the scrambling sequence being used to indicate entering the sleep state;
when the scrambling sequence is generated by a third initial value, the scrambling sequence being used to indicate the second duration of entering the wake-up state; or
when the scrambling sequence is generated by a fourth initial value, the scrambling sequence being used to indicate the third duration of entering the sleep state.

Optionally, the receiving unit 410 is configured to:
receive the sidelink indication information within a first time range.
Optionally, the processing unit 420 is further configured to:
determine a start position of the first time range and/or an end position of the first time range according to a first time domain position.
Optionally, the processing unit 420 is further configured to:

obtain sidelink discontinuous reception (DRX) configuration information; and
determine the first time domain position according to the sidelink DRX configuration information.

Optionally, the sidelink DRX configuration information includes a DRX on-duration timer, and the first time domain position is determined according to a start time moment of the DRX on-duration timer , or a reset time moment of the DRX on-duration timer, or a time moment when the DRX on-duration timer comes into effect.
Optionally, the processing unit 420 is further configured to:

determine the start position of the first time range according to the first time domain position and a first time interval; or,
determine the first time domain position as the start position of the first time range.

Optionally, the first time interval is determined according to pre-configured information, or determined according to network configuration information, or determined according to indication information of another terminal, or determined by the terminal.
Optionally, the processing unit is further configured to:
determine the end position of the first time range according to the start position of the first time range and a fourth duration.
Optionally, the fourth duration is determined according to pre-configuration information, or determined according to network configuration information, or determined according to indication information of another terminal, or determined by the terminal.

Optionally, the processing unit 420 is further configured to:
determine a previous slot of a slot corresponding to the first time domain position as the end position of the first time range.

Optionally, the processing unit 420 is further configured to:
determine the start position of the first time range according to the end position of the first time range and a fifth duration.

Optionally, the fifth duration is determined according to pre-configuration information, or determined according to network configuration information, or determined according to indication information of another terminal, or determined by the terminal.

The terminal 400 in embodiments of the present disclosure can implement the corresponding functions of the terminal in the foregoing method embodiments. For the processes, functions, implementations and beneficial effects corresponding to individual modules (submodules, units or components, etc.) in the terminal 400, reference may be made to the corresponding description in the above method embodiments, and details are not repeated here. It should be noted that the functions described by the various modules (submodules, units or components, etc.) in the terminal 400 in the embodiments of the present disclosure can be implemented by different modules (submodules, units or components, etc.), or implemented by the same module (submodule, unit or component, etc.).

FIG. 14 is a schematic structural diagram of a communication device 600 according to an embodiment of the present disclosure. The communication device 600 includes a processor 610, and the processor 610 may call and run a computer program from a memory to cause the communication device 600 to perform the method in embodiments of the present disclosure.

Optionally, the communication device 600 may further include a memory 620. The processor 610 may call and run a computer program from the memory 620 to cause the communication device 600 to perform the method in embodiments of the present disclosure.

The memory 620 may be a separate device independent of the processor 610, or may be integrated in the processor 610.

Optionally, the communication device 600 may further include a transceiver 630, and the processor 610 may control the transceiver 630 to communicate with other devices. Specifically, the transceiver may send information or data to other devices, or receive information or data sent by other devices.

The transceiver 630 may include a transmitter and a receiver. The transceiver 630 may further include one or more antennas.

According to embodiments, the communication device 600 may be the terminal device in embodiments of the present disclosure, and the communication device 600 may implement the corresponding processes implemented by the terminal device in the method embodiments of the present disclosure. For brevity, details are not repeated here.

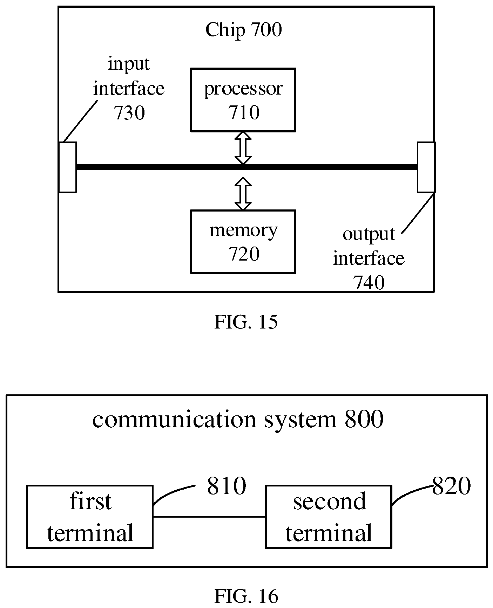

FIG. 15 is a schematic structural diagram of a chip 700 according to an embodiment of the present disclosure. The chip 700 includes a processor 710, and the processor 710 can call and run a computer program from a memory to implement the method according to embodiments of the present disclosure.

Optionally, the chip 700 may further include a memory 720. The processor 710 may call and run a computer program from the memory 720 to implement the method performed by the terminal device or the network device according to embodiments of the present disclosure.

The memory 720 may be a separate device independent of the processor 710, or may be integrated in the processor 710.

Optionally, the chip 700 may further include an input interface 730. The processor 710 may control the input interface 730 to communicate with other devices or chips, and specifically, the processor 710 can control the input interface to obtain information or data sent by other devices or chips.

Optionally, the chip 700 may further include an output interface 740. The processor 710 can control the output interface 740 to communicate with other devices or chips, and specifically, the processor 710 can control the output interface 740 to output information or data to other devices or chips.

Optionally, the chip can be applied to the network device in embodiments of the present disclosure, and the chip can implement the corresponding processes implemented by the network device in various methods according to embodiments of the present disclosure. For brevity, details are not repeated herein again.

Optionally, the chip can be applied to the terminal device in embodiments of the present disclosure, and the chip can implement the corresponding processes implemented by the terminal device in various methods according to embodiments of the present disclosure. For brevity, details are not repeated herein again.

The chip applied to the network device and the chip applied to the terminal device may be the same chip or different chips

It should be understood that the chip in the embodiments of the present disclosure may also be referred to as a system-level chip, a system chip, a chip system, or a system-on-chip, etc.

The above-mentioned processor may be a general-purpose processor, a Digital Signal Processor (DSP), a Field Programmable Gate Array (FPGA), an Application Specific Integrated Circuit (ASIC), or other programmable logic device, transistor logic device, or discrete hardware component. The general-purpose processor may be a microprocessor or any conventional processor or the like.

The memory in the embodiments of the present disclosure may be volatile memory or non-volatile memory, or may include both volatile and non-volatile memory. The non-volatile memory can be Read-Only Memory (ROM), Programmable ROM (PROM), Erasable PROM (EPROM), Electrically EPROM (EEPROM) or flash memory. The volatile memory may be a Random Access Memory (RAM).

It should be understood that the foregoing memory is exemplary but not restrictive. For example, the memory in embodiments of the present disclosure may also be Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), or Direct Rambus RAM (DR RAM), and so on. That is to say, the memory in embodiments of the present disclosure is intended to include but not limited to these and any other suitable types of memory.

FIG. 16 is a schematic block diagram of a communication system 800 according to an embodiment of the present disclosure. The communication system 800 includes a first terminal 810 and a second terminal 820.

The first terminal 810 is used to receive sidelink indication information, and enters the wake-up state or the sleep state according to the sidelink indication information. Specifically, the first terminal 810 may receive the sidelink indication information from the second terminal 820. The first terminal 810 may be used to implement the corresponding functions implemented by a terminal using as a receiving terminal in the methods of the embodiments of the present disclosure. The second terminal 820 may be used to implement the corresponding functions implemented by a terminal using a receiving terminal in the methods of the embodiments of the present disclosure. For the sake of brevity, repeated descriptions are omitted here.

The above-mentioned embodiments may be implemented in whole or in part by software, hardware, firmware or any combination thereof. When implemented in software, the embodiments can be implemented in whole or in part in the form of a computer program product. The computer program product includes one or more computer instructions. When the computer program instructions are loaded and executed on a computer, all or part of the processes or functions described in the embodiments of the present disclosure are produced. The computer may be a general purpose computer, a special purpose computer, a computer network, or other programmable device. The computer instructions may be stored in a computer-readable storage medium or transmitted from one computer-readable storage medium to another computer-readable storage medium, for example, the computer instructions may be transmitted from a website, computer, server, or data center to another website, computer, server, or data center in a wired manner (e.g., via coaxial cable, optical fiber, Digital Subscriber Line (DSL)) or in a wireless manner (e.g., via infrared, wireless, microwave, etc.). The computer-readable storage medium may be any available medium that can be accessed by a computer or a data storage device such as a server, data center, etc. that includes an integration of one or more available medium. The available medium may be magnetic medium (e.g., floppy disks, hard disks, magnetic tapes), optical medium (e.g., Digital Video Disc (DVD)), or semiconductor medium (e.g., Solid State Disk (SSD)), and so on.

It can be understood that, in the embodiments of the present disclosure, the sequence numbers of the above-mentioned processes do not imply the order of execution, and the execution order of each process should be determined by its functions and internal logic, and these sequence numbers should not be construed as any limitation on the implementation of the present disclosure.

It may be clearly understood by those skilled in the art that details of specific operation procedures of the systems, devices and units can be found in the previous description regarding the method embodiments.

The foregoing descriptions are merely example embodiments of the present disclosure, but the protection scope of the present disclosure is not limited thereto. Any person skilled in the art can easily think of changes or substitutions within the technical scope of the present disclosure, and all the changes or substitutions should be covered by the protection scope of the present disclosure. Therefore, the protection scope of the present disclosure should be defied by the appended claims.

**Claims**

1. A sidelink transmission method, comprising:

   receiving, by a terminal, sidelink indication information; and
   entering, by the terminal, a wake-up state or a sleep state according to the sidelink indication information.

2. The method according to claim 1, wherein the wake-up state indicates that the terminal needs to perform sidelink data reception or measurement, and the sleep state indicates that the terminal does not need to perform sidelink data reception or measurement.

3. The method according to claim 1 or 2, wherein the sidelink indication information is a wake-up signal, and the wake-up signal is used to indicate the terminal to enter the wake-up state.

4. The method according to any one of claims 1 to 3, wherein the sidelink indication information is a sleep signal, and the sleep signal is used to indicate the terminal to enter the sleep state.

5. The method according to any one of claims 1 to 4, wherein entering, by the terminal, the wake-up state or the sleep state according to the sidelink indication information comprises:
determining, by the terminal, a time moment to enter the wake-up state or the sleep state based on a time moment when the sidelink indication information is received.

6. The method according to claim 5, wherein the time moment when the sidelink indication information is received by the terminal is a time moment corresponding to the first time-domain symbol or the last time-domain symbol carrying the sidelink indication information.

7. The method according to claim 5 or 6, further comprising:
determining a first duration based on processing time of the terminal.

8. The method according to claim 7, wherein the processing time of the terminal is determined based on time for the terminal to perform sequence detection or sidelink channel detection.

9. The method according to claim 7 or 8, wherein determining, by the terminal, the time moment to enter the wake-up state or the sleep state based on the time moment when the sidelink indication information is received, comprises:
entering, by the terminal, the wake-up state or the sleep state in the first slot after the terminal receives the sidelink indication information for the first duration.

10. The method according to claim 5 or 6, further comprising:
obtaining, by the terminal, first indication information, and determining a time interval, the number of slots, or a slot offset according to the first indication information.

11. The method according to claim 10, further comprising:
obtaining, by the terminal, the first indication information according to pre-configuration information, network configuration information, or sidelink data sent by another terminal.

12. The method according to any one of claims 10 or 11, wherein determining, by the terminal, the time moment to enter the wake-up state or the sleep state based on the time moment when the sidelink indication information is received, comprises:
determining, by the terminal, a slot for entering the wake-up state or the sleep state according to a slot where the sidelink indication information is located and the number of slots or the slot offset.

13. The method according to any one of claims 1 to 12, wherein the sidelink indication information is carried by a sequence.

14. The method according to claim 13, further comprising:

when the sequence is a first sequence, entering, by the terminal, the wake-up state; and/or
when the sequence is a second sequence, entering, by the terminal, the sleep state.

15. The method according to claim 14, further comprising:

when the sequence is the first sequence, determining, by the terminal, a second duration for entering the wake-up state; and/or
when the sequence is the second sequence, determining, by the terminal, a third duration for entering the sleep state.

16. The method according to claim 14 or 15, wherein the first sequence corresponds to a first cyclic shift value, and/or the second sequence corresponds to a second cyclic shift value.

17. The method according to claim 16, wherein the first cyclic shift value has a first correspondence relationship with the wake-up state, and/or, the second cyclic shift value has a second correspondence relationship with the sleep state.

18. The method according to claim 17, wherein the first correspondence relationship is pre-configured, network-configured, or terminal-configured, and/or the second correspondence relationship is pre-configured, network-configured, or terminal-configured.

19. The method according to claim 18, further comprising:

when the first correspondence relationship is pre-configured or network-configured, obtaining, by the terminal, resource pool configuration information, and determining the first correspondence relationship according to the resource pool configuration information; and/or
when the second correspondence relationship is pre-configured or network-configured, obtaining, by the terminal, resource pool configuration information, and determining the second correspondence relationship according to the resource pool configuration information.

20. The method according to claim 18, further comprising:

when the first correspondence relationship is terminal-configured, obtaining, by the terminal, Sidelink Control Information (SCI), PC5-Radio Resource Control (PC5-RRC) signaling, Medium Access Control Control Element (MAC CE) or MAC Protocol Data Unit (PDU), and determining the first correspondence relationship according to the SCI, the PC5-RRC signaling, the MAC CE or the MAC PDU; and/or
when the second correspondence relationship is terminal-configured, obtaining, by the terminal, SCI, PC5-RRC signaling, MAC CE or MAC PDU, and determining the second correspondence relationship according to the SCI, the PC5-RRC signaling, the MAC CE or the MAC PDU.

21. The method according to claim 16, wherein the first cyclic shift value has a third correspondence relationship with the second duration of the wake-up state, and/or the second cyclic shift value has a fourth correspondence relationship with the third duration of the sleep state.

22. The method according to claim 21, wherein the third correspondence relationship is pre-configured, network-configured or terminal-configured, and/or the fourth correspondence relationship is pre-configured, network-configured or terminal-configured.

23. The method according to claim 22, further comprising:

when the third correspondence relationship is pre-configured or network-configured, obtaining, by the terminal, resource pool configuration information, and determining the third correspondence relationship according to the resource pool configuration information; and/or
when the fourth correspondence relationship is pre-configured or network-configured, obtaining, by the terminal, resource pool configuration information, and determining the fourth correspondence relationship according to the resource pool configuration information.

24. The method according to claim 22, further comprising:

when the third correspondence relationship is terminal-configured, obtaining, by the terminal, SCI, PC5-RRC signaling, MAC CE or MAC PDU, and determining the third correspondence relationship according to the SCI, PC5-RRC signaling, MAC CE or MAC PDU; and/or,
when the fourth correspondence relationship is terminal-configured, obtaining, by the terminal, SCI, PC5-RRC signaling, MAC CE or MAC PDU, and determining the four correspondence relationship according to the SCI, PC5-RRC signaling, MAC CE or MAC PDU.

25. The method according to claim 15, wherein the second duration is pre-configured, network-configured or terminal-configured, and/or the third duration is pre-configured, network-configured or terminal-configured configured.

26. The method according to claim 25, further comprising:

when the second duration is pre-configured or network-configured, obtaining, by the terminal, resource pool configuration information, and determining the second duration according to the resource pool configuration information; and/or
when the third duration is pre-configured or network-configured, obtaining, by the terminal, resource pool configuration information, and determining the third duration according to the resource pool configuration information.

27. The method according to claim 25, further comprising:

when the second duration is terminal-configured, obtaining, by the terminal, SCI, PC5-RRC signaling, MAC CE or MAC PDU, and determining the second duration according to the SCI, PC5-RRC signaling, MAC CE or MAC PDU; and/or
when the third duration is terminal-configured, obtaining, by the terminal, SCI, PC5-RRC signaling, MAC CE or MAC PDU, and determining the third duration according to the SCI, PC5-RRC signaling, MAC CE or MAC PDU.

28. The method according to any one of claims 13 to 27, wherein the terminal does not perform sequence detection in the sleep state.

29. The method according to any one of claims 13 to 27, wherein the terminal does not detect SCI in the sleep state.

30. The method according to any one of claims 13 to 29, wherein the sequence corresponding to the sidelink indication information is transmitted independently from other sidelink physical channel.

31. The method according to any one of claims 13 to 30, wherein the sequence corresponding to the sidelink indication information occupies two symbols in a time domain, and is located in the second last and third last sidelink symbols in a slot.

32. The method according to any one of claims 30 to 31, wherein the same sequence is transmitted on two symbols in the time domain occupied by the sequence corresponding to the sidelink indication information.

33. The method according to claim 31 or 32, wherein a symbol preceding the first symbol for carrying the sequence corresponding to the sidelink indication information is a Guard Period (GP) symbol, and/or a symbol following the last symbol for carrying the sequence corresponding to the sidelink indication information is a GP symbol.

34. The method according to any one of claims 13 to 33, wherein a candidate transmission resource for the sequence is periodic.

35. The method according to any one of claims 13 to 34, wherein when a transmission resource for a Physical Sidelink Feedback Channel (PSFCH) and a transmission resource for the sequence are configured in a resource pool, a slot used for transmitting the PSFCH is simultaneously used for transmitting the sequence, or the slot used for transmitting the sequence is simultaneously used for transmitting the PSFCH.

36. The method according to any one of claims 13 to 35, wherein the sequence occupies M Physical Resource Blocks (PRBs) in a frequency domain, where M is an integer greater than or equal to 1.

37. The method according to claim 36, wherein the M PRBs are contiguous PRBs, and a start position of the M PRBs in the frequency domain are obtained by performing a modulo operation on M using a PRB index.

38. The method according to any one of claims 13 to 37, wherein the sequence is generated based on a root sequence, a cyclic shift value and a sequence length.

39. The method according to claim 38, wherein it is determined based on a group number corresponding to the root sequence to enter the wake-up state or the sleep state.

40. The method according to any one of claims 13 to 39, wherein the sequence is determined according to at least one of the following: a source identity (ID), a destination ID, and a group ID.

41. The method according to any one of claims 13 to 40, wherein a transmission resource for the sequence is determined according to at least one of the following: a source ID, a destination ID, and a group ID.

42. The method according to claim 40 or 41, wherein the source ID comprises an ID of a terminal which transmits the sequence.

43. The method according to claim 41 or 42, wherein the destination ID comprises at least one of the following:

an ID of a terminal that receives the sequence in a unicast communication;
a group ID in a groupcast communication;
an ID corresponding to a service type in a broadcast communication.

44. The method according to claim 41 or 42, wherein the source ID is a source ID carried in the SCI, and the destination ID is a destination ID carried in the SCI.

45. The method according to claim 41 or 42, wherein the group ID comprises a group ID in a groupcast communication.

46. The method according to any one of claims 13 to 45, further comprising:

obtaining configuration information, wherein the configuration information is used to configure a transmission resource set for the sequence; and
determining a transmission resource for the sequence according to the configuration information.

47. The method according to claim 46, wherein the configuration information is resource pool configuration information or bandwidth part (BWP) configuration information.

48. The method according to claim 46 or 47, wherein the configuration information is pre-configured or network-configured.

49. The method according to any one of claims 46 to 48, wherein the configuration information comprises at least one of the following parameters:

second indication information used to indicate whether it is supported to indicate the terminal to enter the wake-up state or sleep state via the sidelink indication information;
third indication information used to indicate whether detection of the sidelink indication information is needed in the sleep state;
time-domain resource indication information used to indicate a time-domain resource for the sequence carrying the sidelink indication information;
frequency-domain resource indication information used to indicate a frequency-domain resource for the sequence carrying the sidelink indication information;
code-domain resource indication information used to indicate a code-domain resource for the sequence carrying the sidelink indication information;
wake-up duration indication information; and
sleep duration indication information.

50. The method according to claim 49, wherein the time-domain resource indication information comprises at least one of the following:

period information used to indicate a time domain period for transmitting the sidelink indication information; and
a slot offset used to determine a slot where the sidelink indication information is transmitted in a period.

51. The method according to claim 50, wherein the time domain period being zero indicates that a function of indicating the terminal to enter the wake-up state or the sleep state via the sidelink indication information is not supported.

52. The method according to claim 49, wherein the frequency-domain resource indication information comprises at least one of the following:

the number of sub-channels, the number of PRBs, or a sequence length corresponding to the sequence carrying the sidelink indication information, used to determine a length of the sequence carrying the sidelink indication information; and
frequency-domain resource set indication information used to indicate a frequency-domain resource set usable for the sequence carrying the sidelink indication information.

53. The method according to claim 49, wherein the code-domain resource indication information comprises at least one of the following:

    root sequence indication information used to determine a parameter for generating the root sequence;
    cyclic shift indication information used to determine a cyclic shift value;
    the number of cyclic shift pairs used to indicate the number of supported cyclic shift pairs.

54. The method according to claim 49, wherein the wake-up duration indication information comprises at least one of the following:

    a second duration used to determine a duration of entering the wake-up state;
    a correspondence relationship between a cyclic shift value and a wake-up duration; and
    a correspondence relationship between a value of an information field used to indicate a duration carried in the SCI and the wake-up duration.

55. The method according to claim 49, wherein the sleep duration indication information comprises at least one of the following:

    a third duration used to determine a duration of entering the sleep state;
    a correspondence relationship between a cyclic shift value and a sleep duration; and
    a correspondence relationship between a value of an information field used to indicate a duration carried in the SCI and the sleep duration.

56. The method according to any one of claims 1 to 12, wherein the sidelink indication information is carried by Sidelink Control Information (SCI).

57. The method according to claim 56, wherein the SCI is a first-stage SCI or a second-stage SCI.

58. The method according to claim 56 or 57, wherein the sidelink indication information is carried by an information field in the SCI.

59. The method according to claim 58, wherein carrying of the sidelink indication information by the information field in the SCI comprises at least one of the following:

    the information field being a first value used to indicate that the terminal enters the wake-up state; or
    the information field being a second value used to indicate that the terminal enters the sleep state.

60. The method according to claim 58 or 59, wherein carrying of the sidelink indication information by the information field in the SCI comprises at least one of the following:

    a first information field in the SCI being used to indicate the wake-up state or the sleep state; and
    a second information field in the SCI being used to indicate the second duration of the wake-up state or the third duration of the sleep state.

61. The method according to any one of claims 1 to 12, wherein the sidelink indication information is carried by an SCI format.

62. The method according to claim 61, wherein a first SCI format corresponds to the wake-up state, and/or a second SCI format corresponds to the sleep state.

63. The method according to any one of claims 1 to 12, wherein the sidelink indication information is carried by a scrambling sequence of the SCI.

64. The method according to claim 63, wherein the scrambling sequence is used to scramble a first bit sequence, wherein the first bit sequence is generated according to an information bit of the SCI with a CRC sequence added.

**65.** The method according to claim 63, wherein the scrambling sequence is used to scramble a second bit sequence, wherein the second bit sequence is a bit sequence obtained after channel coding processing of an information bit of the SCI.

**66.** The method according to any one of claims 63 to 65, wherein the scrambling sequence is used to indicate a second duration of the wake-up state and/or a third duration of the sleep state.

**67.** The method according to claim 66, wherein an indication manner of the scrambling sequence comprises at least one of the following:

when the scrambling sequence is generated by a first initial value, the scrambling sequence being used to indicate entering the wake-up state;
when the scrambling sequence is generated by a second initial value, the scrambling sequence being used to indicate entering the sleep state;
when the scrambling sequence is generated by a third initial value, the scrambling sequence being used to indicate the second duration of entering the wake-up state; or
when the scrambling sequence is generated by a fourth initial value, the scrambling sequence being used to indicate the third duration of entering the sleep state.

**68.** The method according to any one of claims 1 to 67, wherein receiving the sidelink indication information by the terminal comprises:
receiving, by the terminal, the sidelink indication information within a first time range.

**69.** The method according to claim 68, further comprising:
determining, by the terminal, a start position of the first time range and/or an end position of the first time range according to a first time domain position.

**70.** The method according to claim 69, further comprising:

obtaining, by the terminal, sidelink discontinuous reception (DRX) configuration information; and
determining, by the terminal, the first time domain position according to the sidelink DRX configuration information.

**71.** The method according to claim 70, wherein:

the sidelink DRX configuration information comprises a DRX on-duration timer, and
the first time domain position is determined according to a start time moment of the DRX on-duration timer, or a reset time moment of the DRX on-duration timer, or a time moment when the DRX on-duration timer comes into effect.

**72.** The method according to any one of claims 69 to 71, wherein determining, by the terminal, the start position of the first time range according to the first time domain position comprises:

determining, by the terminal, the start position of the first time range according to the first time domain position and a first time interval; or,
determining, by the terminal, the first time domain position as the start position of the first time range.

**73.** The method according to claim 72, wherein the first time interval is determined according to pre-configured information, or determined according to network configuration information, or determined according to indication information of another terminal, or determined by the terminal.

**74.** The method according to any one of claims 69 to 73, further comprising:
determining, by the terminal, the end position of the first time range according to the start position of the first time range and a fourth duration.

**75.** The method according to claim 74, wherein the fourth duration is determined according to pre-configuration information, or determined according to network configuration information, or determined according to indication information of another terminal, or determined by the terminal.

76. The method according to any one of claims 69 to 71, wherein determining, by the terminal, the end position of the first time range according to the first time domain position comprises:
determining, by the terminal, a previous slot of a slot corresponding to the first time domain position as the end position of the first time range.

77. The method according to claim 76, further comprising:
determining, by the terminal, the start position of the first time range according to the end position of the first time range and a fifth duration.

78. The method according to claim 77, wherein the fifth duration is determined according to pre-configuration information, or determined according to network configuration information, or determined according to indication information of another terminal, or determined by the terminal.

79. A terminal, comprising:

a receiving unit configured to receive, by the terminal, sidelink indication information; and
a processing unit configured to enter a wake-up state or a sleep state according to the sidelink indication information.

80. The terminal according to claim 79, wherein the wake-up state indicates that the terminal needs to perform sidelink data reception or measurement, and the sleep state indicates that the terminal does not need to perform sidelink data reception or measurement.

81. The terminal according to claim 79 or 80, wherein the sidelink indication information is a wake-up signal, and the wake-up signal is used to indicate the terminal to enter the wake-up state.

82. The terminal according to any one of claims 79 to 81, wherein the sidelink indication information is a sleep signal, and the sleep signal is used to indicate the terminal to enter the sleep state.

83. The terminal according to any one of claims 79 to 82, wherein the processing unit is further configured to:
determine a time moment to enter the wake-up state or the sleep state based on a time moment when the sidelink indication information is received.

84. The terminal according to claim 83, wherein the time moment when the sidelink indication information is received by the terminal is a time moment corresponding to the first time-domain symbol or the last time-domain symbol carrying the sidelink indication information.

85. The terminal according to claim 83 or 84, wherein the processing unit is further configured to:
determine a first duration based on processing time of the terminal.

86. The terminal according to claim 85, wherein the processing time of the terminal is determined based on time for the terminal to perform sequence detection or sidelink channel detection.

87. The terminal according to claim 85 or 86, wherein the processing unit is further configured to:
enter the wake-up state or the sleep state in the first slot after the sidelink indication information is received for the first duration.

88. The terminal according to claim 83 or 84, wherein the processing unit is further configured to:
obtain first indication information, and determine a time interval, the number of slots, or a slot offset according to the first indication information.

89. The terminal according to claim 88, wherein the processing unit is further configured to:
obtain the first indication information according to pre-configuration information, network configuration information, or sidelink data sent by another terminal.

90. The terminal according to any one of claims 88 or 89, wherein the processing unit is further configured to:
determine a slot for entering the wake-up state or the sleep state according to a slot where the sidelink indication information is located and the number of slots or the slot offset.

**91.** The terminal according to any one of claims 79 to 90, wherein the sidelink indication information is carried by a sequence.

**92.** The terminal according to claim 91, wherein the processing unit is further configured to:

when the sequence is a first sequence, enter the wake-up state; and/or
when the sequence is a second sequence, enter the sleep state.

**93.** The terminal according to claim 92, wherein the processing unit is further configured to:

when the sequence is the first sequence, determine a second duration for entering the wake-up state; and/or
when the sequence is the second sequence, determine a third duration for entering the sleep state.

**94.** The terminal according to claim 92 or 93, wherein the first sequence corresponds to a first cyclic shift value, and/or the second sequence corresponds to a second cyclic shift value.

**95.** The terminal according to claim 94, wherein the first cyclic shift value has a first correspondence relationship with the wake-up state, and/or, the second cyclic shift value has a second correspondence relationship with the sleep state.

**96.** The terminal according to claim 95, wherein the first correspondence relationship is pre-configured, network-configured, or terminal-configured, and/or the second correspondence relationship is pre-configured, network-configured, or terminal-configured.

**97.** The terminal according to claim 96, wherein the processing unit is further configured to:

when the first correspondence relationship is pre-configured or network-configured, obtain resource pool configuration information, and determine the first correspondence relationship according to the resource pool configuration information; and/or
when the second correspondence relationship is pre-configured or network-configured, obtain resource pool configuration information, and determine the second correspondence relationship according to the resource pool configuration information.

**98.** The terminal according to claim 96, wherein the processing unit is further configured to:

when the first correspondence relationship is terminal-configured, obtain Sidelink Control Information (SCI), PC5-Radio Resource Control (PC5-RRC) signaling, Medium Access Control Control Element (MAC CE) or MAC Protocol Data Unit (PDU), and determining the first correspondence relationship according to the SCI, the PC5-RRC signaling, the MAC CE or the MAC PDU; and/or
when the second correspondence relationship is terminal-configured, obtain SCI, PC5-RRC signaling, MAC CE or MAC PDU, and determining the second correspondence relationship according to the SCI, the PC5-RRC signaling, the MAC CE or the MAC PDU.

**99.** The terminal according to claim 94, wherein the first cyclic shift value has a third correspondence relationship with the second duration of the wake-up state, and/or the second cyclic shift value has a fourth correspondence relationship with the third duration of the sleep state.

**100.** The terminal according to claim 99, wherein the third correspondence relationship is pre-configured, network-configured or terminal-configured, and/or the fourth correspondence relationship is pre-configured, network-configured or terminal-configured.

**101.** The terminal according to claim 100, wherein the processing unit is further configured to:

when the third correspondence relationship is pre-configured or network-configured, obtain resource pool configuration information, and determine the third correspondence relationship according to the resource pool configuration information; and/or
when the fourth correspondence relationship is pre-configured or network-configured, obtain resource pool configuration information, and determine the fourth correspondence relationship according to the resource pool configuration information.

**102.** The terminal according to claim 100, wherein the processing unit is further configured to:

when the third correspondence relationship is terminal-configured, obtain SCI, PC5-RRC signaling, MAC CE or MAC PDU, and determine the third correspondence relationship according to the SCI, PC5-RRC signaling, MAC CE or MAC PDU; and/or,
when the fourth correspondence relationship is terminal-configured, obtain SCI, PC5-RRC signaling, MAC CE or MAC PDU, and determine the four correspondence relationship according to the SCI, PC5-RRC signaling, MAC CE or MAC PDU.

**103.** The terminal according to claim 93, wherein the second duration is pre-configured, network-configured or terminal-configured, and/or the third duration is pre-configured, network-configured or terminal-configured configured.

**104.** The terminal according to claim 103, wherein the processing unit is configured to:

when the second duration is pre-configured or network-configured, obtain resource pool configuration information, and determine the second duration according to the resource pool configuration information; and/or
when the third duration is pre-configured or network-configured, obtain resource pool configuration information, and determine the third duration according to the resource pool configuration information.

**105.** The terminal according to claim 103, wherein the processing unit is configured to:

when the second duration is terminal-configured, obtain SCI, PC5-RRC signaling, MAC CE or MAC PDU, and determine the second duration according to the SCI, PC5-RRC signaling, MAC CE or MAC PDU; and/or
when the third duration is terminal-configured, obtain SCI, PC5-RRC signaling, MAC CE or MAC PDU, and determine the third duration according to the SCI, PC5-RRC signaling, MAC CE or MAC PDU.

**106.** The terminal according to any one of claims 91 to 105, wherein the terminal does not perform sequence detection in the sleep state.

**107.** The terminal according to any one of claims 91 to 105, wherein the terminal does not detect SCI in the sleep state.

**108.** The terminal according to any one of claims 91 to 107, wherein the sequence corresponding to the sidelink indication information is transmitted independently from other sidelink physical channel.

**109.** The terminal according to any one of claims 91 to 107, wherein the sequence corresponding to the sidelink indication information occupies two symbols in a time domain, and is located in the second last and third last sidelink symbols in a slot.

**110.** The terminal according to claim 108 or 109, wherein the same sequence is transmitted on two symbols in the time domain occupied by the sequence corresponding to the sidelink indication information.

**111.** The terminal according to claim 109 or 110, wherein a symbol preceding the first symbol for carrying the sequence corresponding to the sidelink indication information is a Guard Period (GP) symbol, and/or a symbol following the last symbol for carrying the sequence corresponding to the sidelink indication information is a GP symbol.

**112.** The terminal according to any one of claims 91 to 111, wherein a candidate transmission resource for the sequence is periodic.

**113.** The terminal according to any one of claims 91 to 112, wherein when a transmission resource for a Physical Sidelink Feedback Channel (PSFCH) and a transmission resource for the sequence are configured in a resource pool, a slot used for transmitting the PSFCH is simultaneously used for transmitting the sequence, or the slot used for transmitting the sequence is simultaneously used for transmitting the PSFCH.

**114.** The terminal according to any one of claims 91 to 113, wherein the sequence occupies M Physical Resource Blocks (PRBs) in a frequency domain, where M is an integer greater than or equal to 1.

**115.** The terminal according to claim 114, wherein the M PRBs are contiguous PRBs, and a start position of the M PRBs in the frequency domain is obtained by performing a modulo operation on M using a PRB index.

116. The terminal according to any one of claims 91 to 115, wherein the sequence is generated based on a root sequence, a cyclic shift value and a sequence length.

117. The terminal according to claim 116, wherein it is determined based on a group number corresponding to the root sequence to enter the wake-up state or the sleep state.

118. The terminal according to any one of claims 91 to 117, wherein the sequence is determined according to at least one of the following: a source identity (ID), a destination ID, and a group ID.

119. The terminal according to any one of claims 91 to 118, wherein a transmission resource for the sequence is determined according to at least one of the following: a source ID, a destination ID, and a group ID.

120. The terminal according to claim 118 or 119, wherein the source ID comprises an ID of a terminal which transmits the sequence.

121. The terminal according to claim 118 or 119, wherein the destination ID comprises at least one of the following:

an ID of a terminal that receives the sequence in a unicast communication;
a group ID in a groupcast communication;
an ID corresponding to a service type in a broadcast communication.

122. The terminal according to claim 118 or 119, wherein the source ID is a source ID carried in the SCI, and the destination ID is a destination ID carried in the SCI.

123. The terminal according to claim 118 or 119, wherein the group ID comprises a group ID in a groupcast communication.

124. The terminal according to any one of claims 91 to 123, further comprising:

obtaining configuration information, wherein the configuration information is used to configure a transmission resource set for the sequence; and
determining a transmission resource for the sequence according to the configuration information.

125. The terminal according to claim 124, wherein the configuration information is resource pool configuration information or bandwidth part (BWP) configuration information.

126. The terminal according to claim 124 or 125, wherein the configuration information is pre-configured or network-configured.

127. The terminal according to any one of claims 124 to 126, wherein the configuration information comprises at least one of the following parameters:

second indication information used to indicate whether it is supported to indicate the terminal to enter the wake-up state or sleep state via the sidelink indication information;
third indication information used to indicate whether detection of the sidelink indication information is needed in the sleep state;
time-domain resource indication information used to indicate a time-domain resource for the sequence carrying the sidelink indication information;
frequency-domain resource indication information used to indicate a frequency-domain resource for the sequence carrying the sidelink indication information;
code-domain resource indication information used to indicate a code-domain resource for the sequence carrying the sidelink indication information;
wake-up duration indication information; and
sleep duration indication information.

128. The terminal according to claim 127, wherein the time-domain resource indication information comprises at least one of the following:

period information used to indicate a time domain period for transmitting the sidelink indication information; and

a slot offset used to determine a slot where the sidelink indication information is transmitted in a period.

129. The terminal according to claim 128, wherein the time domain period being zero indicates that a function of indicating the terminal to enter the wake-up state or the sleep state via the sidelink indication information is not supported.

130. The terminal according to claim 127, wherein the frequency-domain resource indication information comprises at least one of the following:

the number of sub-channels, the number of PRBs, or a sequence length corresponding to the sequence carrying the sidelink indication information, used to determine a length of the sequence carrying the sidelink indication information; and
frequency-domain resource set indication information used to indicate a frequency-domain resource set usable for the sequence carrying the sidelink indication information.

131. The terminal according to claim 127, wherein the code-domain resource indication information comprises at least one of the following:

root sequence indication information used to determine a parameter for generating the root sequence;
cyclic shift indication information used to determine a cyclic shift value;
the number of cyclic shift pairs used to indicate the number of supported cyclic shift pairs.

132. The terminal according to claim 127, wherein the wake-up duration indication information comprises at least one of the following:

a second duration used to determine a duration of entering the wake-up state;
a correspondence relationship between a cyclic shift value and a wake-up duration; and
a correspondence relationship between a value of an information field used to indicate a duration carried in the SCI and the wake-up duration.

133. The terminal according to claim 127, wherein the sleep duration indication information comprises at least one of the following:

a third duration used to determine a duration of entering the sleep state;
a correspondence relationship between a cyclic shift value and a sleep duration; and
a correspondence relationship between a value of an information field used to indicate a duration carried in the SCI and the sleep duration.

134. The terminal according to any one of claims 79 to 90, wherein the sidelink indication information is carried by Sidelink Control Information (SCI).

135. The terminal according to claim 134, wherein the SCI is a first-stage SCI or a second-stage SCI.

136. The terminal according to claim 134 or 124, wherein the sidelink indication information is carried by an information field in the SCI.

137. The terminal according to claim 136, wherein carrying of the sidelink indication information by the information field in the SCI comprises at least one of the following:

the information field being a first value used to indicate that the terminal enters the wake-up state; or
the information field being a second value used to indicate that the terminal enters the sleep state.

138. The terminal according to claim 136 or 137, wherein carrying of the sidelink indication information by the information field in the SCI comprises at least one of the following:

a first information field in the SCI being used to indicate the wake-up state or the sleep state; and
a second information field in the SCI being used to indicate the second duration of the wake-up state or the third duration of the sleep state.

**139.** The terminal according to any one of claims 79 to 90, wherein the sidelink indication information is carried by an SCI format.

**140.** The terminal according to claim 139, wherein a first SCI format corresponds to the wake-up state, and/or a second SCI format corresponds to the sleep state.

**141.** The terminal according to any one of claims 79 to 90, wherein the sidelink indication information is carried by a scrambling sequence of the SCI.

**142.** The terminal according to claim 141, wherein the scrambling sequence is used to scramble a first bit sequence, wherein the first bit sequence is generated according to an information bit of the SCI with a CRC sequence added.

**143.** The terminal according to claim 141, wherein the scrambling sequence is used to scramble a second bit sequence, wherein the second bit sequence is a bit sequence obtained after channel coding processing of an information bit of the SCI.

**144.** The terminal according to any one of claims 141 to 143, wherein the scrambling sequence is used to indicate a second duration of the wake-up state and/or a third duration of the sleep state.

**145.** The terminal according to claim 144, wherein an indication manner of the scrambling sequence comprises at least one of the following:

when the scrambling sequence is generated by a first initial value, the scrambling sequence being used to indicate entering the wake-up state;
when the scrambling sequence is generated by a second initial value, the scrambling sequence being used to indicate entering the sleep state;
when the scrambling sequence is generated by a third initial value, the scrambling sequence being used to indicate the second duration of entering the wake-up state; or
when the scrambling sequence is generated by a fourth initial value, the scrambling sequence being used to indicate the third duration of entering the sleep state.

**146.** The terminal according to any one of claims 79 to 145, wherein the receiving unit is configured to:
receive the sidelink indication information within a first time range.

**147.** The terminal according to claim 146, wherein the processing unit is further configured to:
determine a start position of the first time range and/or an end position of the first time range according to a first time domain position.

**148.** The terminal according to claim 147, wherein the processing unit is further configured to:

obtain sidelink discontinuous reception (DRX) configuration information; and
determine the first time domain position according to the sidelink DRX configuration information.

**149.** The terminal according to claim 148, wherein:

the sidelink DRX configuration information comprises a DRX on-duration timer, and
the first time domain position is determined according to a start time moment of the DRX on-duration timer , or a reset time moment of the DRX on-duration timer, or a time moment when the DRX on-duration timer comes into effect.

**150.** The terminal according to any one of claims 147 to 149, wherein the processing unit is further configured to:

determine the start position of the first time range according to the first time domain position and a first time interval; or,
determine the first time domain position as the start position of the first time range.

**151.** The terminal according to claim 150, wherein the first time interval is determined according to pre-configured information, or determined according to network configuration information, or determined according to indication information of another terminal, or determined by the terminal.

152. The terminal according to any one of claims 147 to 151, wherein the processing unit is further configured to:
determine the end position of the first time range according to the start position of the first time range and a fourth duration.

153. The terminal according to claim 152, wherein the fourth duration is determined according to pre-configuration information, or determined according to network configuration information, or determined according to indication information of another terminal, or determined by the terminal.

154. The terminal according to any one of claims 147 to 149, wherein the processing unit is further configured to:
determine a previous slot of a slot corresponding to the first time domain position as the end position of the first time range.

155. The terminal according to claim 154, wherein the processing unit is further configured to:
determine the start position of the first time range according to the end position of the first time range and a fifth duration.

156. The terminal according to claim 155, wherein the fifth duration is determined according to pre-configuration information, or determined according to network configuration information, or determined according to indication information of another terminal, or determined by the terminal.

157. A terminal device, comprising: a processor and a memory, wherein the memory is configured to store a computer program, and the processor is configured to call and run the computer program stored in the memory to perform the method according to any one of claims 1 to 78.

158. A chip, comprising: a processor configured to call and run a computer program from a memory to cause a device in which the chip is installed to perform the method according to any one of claims 1 to 78.

159. A computer-readable storage medium for storing a computer program that causes a computer to perform the method according to any one of claims 1 to 78.

160. A computer program product comprising computer program instructions that cause a computer to perform the method according to any one of claims 1 to 78.

161. A computer program that causes a computer to perform the method according to any one of claims 1 to 78.

**100**

FIG. 1

base station

sidelink
communication

FIG. 2a

base station

sidelink communication

FIG. 2b

sidelink communication

FIG. 2c

UE1                UE2

Data

FIG. 3a

Group

UE2

UE1

UE3

UE4

FIG. 3b

UE2

UE6

UE3

UE1

UE5

UE4

FIG. 3c

UE should
monitor
PDCCH ⟶

On state
(On Duration)

No reception state
(Off duration)

⟵————————DRX Cycle————————⟶

FIG. 4

power-saving signal
indicating to monitor
PDCCH

power-saving signal
indicating not to
monitor PDCCH

power-saving signal
indicating not to
monitor PDCCH

power-saving
signal indicating
to monitor
PDCCH

0

1

2

3

⟵—⟶
DRX cycle

FIG. 5

200

Receive, by the terminal, sidelink indication information — S210

Enter, by the terminal, a wake-up state or a sleep state according to
the sidelink indication information — S220

FIG. 6

FIG. 7

no indication
information

FIG. 8

sleep duration

FIG. 9

FIG. 10

FIG. 11

FIG. 12

Terminal 400

410 — receiving unit

420 — processing unit

FIG. 13

communication device
600

memory
620

processor
610

transceiver
630

FIG. 14

Chip 700

input
interface
730

processor
710

memory
720

output
interface
740

FIG. 15

communication system 800

first
terminal

810

second
terminal

820

FIG. 16

## INTERNATIONAL SEARCH REPORT

| | International application No. |
| --- | --- |
| | **PCT/CN2021/119003** |

**A. CLASSIFICATION OF SUBJECT MATTER**

H04W 52/02(2009.01)i

According to International Patent Classification (IPC) or to both national classification and IPC

**B. FIELDS SEARCHED**

Minimum documentation searched (classification system followed by classification symbols)

H04W; H04Q; H04L

Documentation searched other than minimum documentation to the extent that such documents are included in the fields searched

Electronic data base consulted during the international search (name of data base and, where practicable, search terms used)

CNKI; CNPAT; WPI; EPODOC; 3GPP; IEEE: 侧链, 副链, 唤醒, 休眠, 睡眠, 指示, 通知, 配置, 时长, 符号, 时隙, 序列, sidelink, wakeup, DRX, sleep, configr+, sequence, sav+, D2D, power, control+, indicat+, slot

**C. DOCUMENTS CONSIDERED TO BE RELEVANT**

| Category* | Citation of document, with indication, where appropriate, of the relevant passages | Relevant to claim No. |
| --- | --- | --- |
| X | US 2020053647 A1 (LG ELECTRONICS INC.) 13 February 2020 (2020-02-13) description, paragraphs [0106]-[0140] | 1-161 |
| X | CN 107113727 A (TELEFONAKTIEBOLAGET LM ERICSSON (PUBL)) 29 August 2017 (2017-08-29) description, paragraphs [0044]-[0052], and figures 1 and 4 | 1-161 |
| X | LENOVO et al. "Sidelink resource allocation for Power saving." *3GPP TSG RAN WG1 #102-e R1-2005839.*, 28 August 2020 (2020-08-28), section 2.4 | 1-161 |
| A | HUAWEI et al. "Discussion on low power consumption." *3GPP TSG RAN1 Meeting #88b R1-1704305.*, 07 April 2017 (2017-04-07), entire document | 1-161 |
| A | CN 109327888 A (VIVO COMMUNICATION TECHNOLOGY CO., LTD.) 12 February 2019 (2019-02-12) entire document | 1-161 |

☐ Further documents are listed in the continuation of Box C.    ☑ See patent family annex.

| | |
| --- | --- |
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **04 November 2021** | **30 November 2021** |

| Name and mailing address of the ISA/CN | Authorized officer |
| --- | --- |
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2021/119003** |

| Patent document cited in search report | | | Publication date (day/month/year) | Patent family member(s) | | | Publication date (day/month/year) |
| --- | --- | --- | --- | --- | --- | --- | --- |
| US | 2020053647 | A1 | 13 February 2020 | WO | 2018199652 | A1 | 01 November 2018 |
| CN | 107113727 | A | 29 August 2017 | US | 2016142974 | A1 | 19 May 2016 |
| | | | | WO | 2016074899 | A1 | 19 May 2016 |
| | | | | JP | 2018503992 | A | 08 February 2018 |
| | | | | EP | 3219155 | A1 | 20 September 2017 |
| CN | 109327888 | A | 12 February 2019 | WO | 2019024629 | A1 | 07 February 2019 |
| | | | | EP | 3664520 | A1 | 10 June 2020 |
| | | | | US | 2021007053 | A1 | 07 January 2021 |

Form PCT/ISA/210 (patent family annex) (January 2015)

**REFERENCES CITED IN THE DESCRIPTION**

**Patent documents cited in the description**

- CN 2020119458 W